# EUROPEAN PATENT APPLICATION

(11) **EP 4 471 084 A1**
(43) Date of publication of application: **04.12.2024**
(21) Application number: 23746865.7
(22) Date of filing: 20.01.2023
(51) Int. Cl.: C08L 9/00, B60C 1/00, C08L 91/00

(54) **OIL-EXTENDED CONJUGATED DIENE-BASED POLYMER, RUBBER COMPOSITION, CROSSLINKED RUBBER PRODUCT, AND TIRE**

(30) Priority: 27.01.2022 JP 2022011244
(71) Applicant: ZS Elastomers Co., Ltd., Tokyo 100-8246 (JP); Zeon Corporation, Tokyo 100-8246 (JP); Sumitomo Chemical Company, Limited, Tokyo 103-6020 (JP)
(72) Inventor: IIZUKA, Takashi, Tokyo 100-8246 (JP)
(74) Representative: Maiwald GmbH
(86) International application number: PCT/JP2023/001758
(87) International publication number: WO 2023/145652

(57) **Abstract**

Provided is an oil-extended conjugated diene polymer comprising a conjugated diene polymer (A) extended using 5 to 60 parts by weight of an oil (B) relative to 100 parts by weight of the conjugated diene polymer (A), wherein in the oil (B), (1) a UV/RI detection area ratio [X_{UV}/X_{RI}] specified in the specification is 10 or less, and (2) an extrapolated initial melting temperature [Tᵢₘ₋ₘₐₓ] of a melting peak in the highest temperature region specified in the specification is 23°C or less.

## Description

### TECHNICAL FIELD

The present invention relates to an oil-extended conjugated diene polymer, a rubber composition, a cross-linked rubber, and a tire.

### BACKGROUND ART

Due to recent increasing environmental concerns, a polymer for use in tires for automobiles which can provide excellent fuel efficiency is required. Tires prepared from a rubber composition containing a conjugated diene polymer and silica as a filler have lower heat buildup than that of tires prepared from traditional rubber compositions containing carbon black, and thus have further enhanced fuel efficiency.

As a conjugated diene rubber for providing such tires, Patent Document 1 discloses a conjugated diene rubber including a polymer block (A) containing isoprene monomer units as the main component, and a polymer block (B) containing 1,3-butadiene monomer units as the main component, wherein at least one of the polymer block (A) and the polymer block (B) contains units of a vinyl compound containing a functional group interactive with silica, the polymer block (A) has a weight average molecular weight (Mw) in the range of 1,000 to 30,000, and the entire conjugated diene rubber has a weight average molecular weight (Mw) in the range of 50,000 to 5,000,000.

Moreover, cross-linked rubbers prepared from oil-extended conjugated diene polymers are used in production of tires for automobiles and the like. In such cross-linked rubbers, bloom (deposition of a component in a cross-linked rubber, mainly solid components on the surface of the cross-linked rubber) may occur as time passes, and an oil-extended conjugated diene polymer enabling a suppression in occurrence of such bloom is required. From the viewpoint of grip performance or the like under a low-temperature environment, there is a demand for an oil-extended conjugated diene polymer which can form a cross-linked rubber having enhanced low-temperature properties.

### RELATED ART DOCUMENTS

### PATENT DOCUMENTS

Patent Document 1: WO 2019/073828

### SUMMARY OF THE INVENTION

### PROBLEM TO BE SOLVED BY THE INVENTION

While the conjugated diene rubber obtained by the technique disclosed in Patent Document 1 can form a cross-linked rubber having enhanced low heat buildup and handling stability, there is still susceptible to an improvement in low-temperature properties of a cross-linked rubber to be obtained.

The present invention has been made in consideration of the above problems, and an object of the present invention is to provide an oil-extended conjugated diene polymer which can form a cross-linked rubber having enhanced low-temperature properties and bloom resistance.

### MEANS FOR SOLVING PROBLEMS

The present inventors, who have conducted extensive research to achieve the above object, have found that the above object can be achieved by an oil-extended conjugated diene polymer comprising a conjugated diene polymer (A) extended using an oil (B) in an amount of 5 to 60 parts by weight relative to 100 parts by weight of the conjugated diene polymer (A) wherein in the oil (B), (1) a UV/RI detection area ratio [X_{UV}/X_{RI}] described later is 10 or less, and (2) an extrapolated initial melting temperature [Tᵢₘ₋ₘₐₓ] of a melting peak in the highest temperature region described later is 23°C or less, and have completed the present invention.

Specifically, the present invention provides an oil-extended conjugated diene polymer, wherein the content of an oil (B) is 5 to 60 parts by weight relative to 100 parts by weight of a conjugated diene polymer (A), and
in the oil (B),
(1) a ratio [X_{UV}/X_{RI}] of a UV detection area [X_{UV}] to an RI detection area [X_{RI}] is 10 or less, where in gel permeation chromatography analysis using a differential refractive index detector and an ultraviolet absorption detector, the elution area derived from the oil (B) in an elution profile obtained using the differential refractive index detector is defined as an RI detection area [X_{RI}], and the elution area derived from the oil (B) in an elution profile obtained using the ultraviolet absorption detector is defined as a UV detection area [X_{UV}], and
(2) the oil (B) shows one or more melting peaks measured by differential scanning calorimetry, and among melting peaks showing a heat of fusion of 10% or more of the total heat of fusion measured by differential scanning calorimetry, an extrapolated initial melting temperature [Tᵢₘ₋ₘₐₓ] of a melting peak having the highest peak temperature is 23°C or less.

In the oil-extended conjugated diene polymer according to the present invention, preferably, the oil (B) has an iodine number of 150 or more.

The oil-extended conjugated diene polymer according to the present invention preferably has a Mooney viscosity (ML1+4, 100°C) of 10 to 200.

The present invention also provides a rubber composition comprising the oil-extended conjugated diene polymer and a filler.

The rubber composition according to the present invention preferably comprises silica as the filler.

The rubber composition according to the present invention preferably further comprises a silane coupling agent.

Moreover, the present invention provides a cross-linkable rubber composition comprising the rubber composition and a cross-linking agent.

In addition, the present invention provides a cross-linked rubber which is a cross-linked product of the rubber composition, and a tire comprising such a cross-linked rubber.

### EFFECTS OF INVENTION

The present invention provides a oil-extended conjugated diene polymer which can form a cross-linked rubber having enhanced low-temperature properties and bloom resistance.

### DESCRIPTION OF EMBODIMENTS

### <Oil-extended conjugated diene polymer>

The oil-extended conjugated diene polymer according to the present invention is an oil-extended conjugated diene polymer comprising a conjugated diene polymer (A) extended with an oil (B), wherein the content of the oil (B) is 5 to 60 parts by weight relative to 100 parts by weight of the conjugated diene polymer (A), and in the oil (B), as described later, (1) a UV/RI detection area ratio [X_{UV}/X_{RI}] is 10 or less, and (2) an extrapolated initial melting temperature [Tᵢₘ₋ₘₐₓ] of a melting peak in the highest temperature region is 23°C or less.

### [Conjugated diene polymer (A)]

The conjugated diene polymer (A) used in the present invention contains at least conjugated diene monomer units. Examples of conjugated diene compounds for forming conjugated diene monomer units include 1,3-butadiene, isoprene, 2,3-dimethyl-1,3-butadiene, 2-chloro-1,3-butadiene, 1,3-pentadiene, 1,3-hexadiene, and the like. Among these, 1,3-butadiene and isoprene are preferred, and 1,3-butadiene is more preferred.

The proportion of conjugated diene monomer units in the conjugated diene polymer (A) is not particularly limited, and is preferably 30 to 100% by weight, more preferably 35 to 95% by weight, still more preferably 40 to 90% by weight, further still more preferably 45 to 85% by weight, particularly preferably 45 to 80% by weight, most preferably 50 to 70% by weight. By controlling the proportion of conjugated diene monomer units within these ranges above, the oil-extended conjugated diene polymer can form a cross-linked rubber having high processability and having further enhanced low-temperature properties and bloom resistance.

The vinyl bond content in the conjugated diene monomer units in the conjugated diene polymer (A) is preferably 1 to 90 mol%, more preferably 10 to 80 mol%, still more preferably 20 to 70 mol%, further still more preferably 25 to 65 mol%, particularly preferably 30 to 60 mol%, most preferably 30 to 44 mol%. By controlling the vinyl bond content in the conjugated diene monomer units within these ranges above, the oil-extended conjugated diene polymer can form a cross-linked rubber having high processability and having further enhanced low-temperature properties and bloom resistance.

The conjugated diene polymer (A) used in the present invention is preferably a copolymer containing aromatic vinyl monomer units in addition to conjugated diene monomer units. Examples of aromatic vinyl monomers for forming aromatic vinyl monomer units include styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, styrene is preferred.

The proportion of aromatic vinyl monomer units in the conjugated diene polymer (A) is not particularly limited, and is preferably 0 to 70% by weight, more preferably 5 to 65% by weight, still more preferably 10 to 60% by weight, further still more preferably 15 to 55% by weight, particularly preferably 20 to 55% by weight, most preferably 30 to 50% by weight. By controlling the proportion of aromatic vinyl monomer units within these ranges above, the oil-extended conjugated diene polymer can form a cross-linked rubber having high processability and having further enhanced low-temperature properties and bloom resistance.

The conjugated diene polymer (A) used in the present invention may contain units of a vinyl compound containing a functional group interactive with silica, in addition to the conjugated diene monomer units and the aromatic vinyl monomer units optionally contained.

The vinyl compound containing a functional group interactive with silica, which is used to form units of a vinyl compound containing a functional group interactive with silica, can be any compound as long as it has a functional group interactive with silica and a vinyl group. For example, the compound disclosed in WO 2019/073828 can be used.

Here, the functional group interactive with silica is a functional group which can form a covalent bond between the functional group and the surface of silica or can cause an intermolecular force weaker than a covalent bond (such as ion-dipole interaction, dipole-dipole interaction, hydrogen bond, or van der Waals force). Examples of such a functional group interactive with silica include, but not particularly limited to, nitrogen atom-containing functional groups, silicon atom-containing functional groups, oxygen atom-containing functional groups, and the like. Among these, silicon atom-containing functional groups are preferred from the viewpoint of high interaction with silica.

In a preferred embodiment of the vinyl compound containing a functional group interactive with silica, the vinyl compound having a silicon atom-containing functional group which can be suitably used, for example, is a compound represented by General Formula (1).

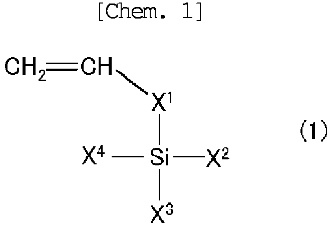

In General Formula (1) above, X¹ represents a chemical single bond or a hydrocarbylene group, and X², X³, and X⁴ each independently represent a substituted amino group, a hydrocarbyloxy group, or an optionally substituted hydrocarbyl group.

In General Formula (1) above, X¹ is a chemical single bond or a hydrocarbylene group, preferably a chemical single bond. Examples of the hydrocarbylene group include alkylene groups, alkenediyl groups, arylene groups, groups of arylene groups bonded to alkylene groups, and the like.

Examples of alkylene groups include a methylene group, an ethylene group, a trimethylene group, and the like. Examples of alkenediyl groups include a vinylene group, an ethylene-1,1-diyl group, and the like. Examples of arylene groups include a phenylene group, a naphthylene group, a biphenylene group, and the like. Examples of groups of arylene groups bonded to alkylene groups include a group of a phenylene group bonded to a methylene group, a group of a phenylene group bonded to an ethylene group, and the like. When X¹ is a hydrocarbylene group, X¹ is preferably an arylene group, more preferably a phenylene group.

In General Formula (1) above, X², X³, and X⁴ each independently represent a substituted amino group, a hydrocarbyloxy group, or an optionally substituted hydrocarbyl group. It is preferred that at least one of X², X³, and X⁴ be a substituted amino group, and it is more preferred that two of X², X³, and X⁴ be a substituted amino group.

A suitable a substituted amino group which can form X², X³, and X⁴ is a group represented by General Formula (2) below:

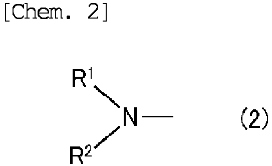

In General Formula (2) above, R¹ and R² may or may not be bonded to each other; if R¹ and R² are not bonded to each other, R¹ and R² each independently represent an optionally substituted hydrocarbyl group or a trihydrocarbylsilyl group; and if R¹ and R² are bonded to each other, R¹ and R² represent a hydrocarbylene group optionally containing at least one species selected from the group consisting of nitrogen, oxygen, sulfur, and silicon atoms.

Examples of a hydrocarbyl group which can form R¹ and R² include linear alkyl groups such as a methyl group, an ethyl group, an n-propyl group, an isopropyl group, an n-butyl group, an isobutyl group, a sec-butyl group, a tert-butyl group, an n-pentyl group, an n-hexyl group, and an n-octyl group; cyclic alkyl groups such as a cyclopentyl group and a cyclohexyl group; aryl groups such as a phenyl group, a benzyl group, and a naphthyl group; and the like. Among these, linear alkyl groups are preferred, and a methyl group or an ethyl group is more preferred.

If the hydrocarbyl group which can form R¹ and R² has a substituent, examples thereof include hydrocarbyl groups having a hydrocarbyloxy group as a substituent. Examples of the hydrocarbyl groups having a hydrocarbyloxy group as a substituent include alkoxyalkyl groups such as a methoxymethyl group, an ethoxymethyl group, and a methoxyethyl group; aryloxyalkyl groups such as a phenoxymethyl group; and the like.

Specific examples of a trihydrocarbylsilyl group which can form R¹ and R² include trialkylsilyl groups such as a trimethylsilyl group, a triethylsilyl group, and a tert-butyldimethylsilyl group, and the like.

If R¹ and R² are bonded to each other, examples of the hydrocarbylene group which can form R¹ and R² include alkylene groups such as a trimethylene group, a tetramethylene group, a pentamethylene group, a hexamethylene group, a heptamethylene group, an octamethylene group, a decamethylene group, a dodecamethylene group, and a 2,2,4-trimethylhexane-1,6-diyl group; alkenediyl groups such as a pentan-2-ene-1,5-diyl group; and the like. If the hydrocarbylene group which can form R¹ and R² contains at least one species selected from the group consisting of nitrogen, oxygen, sulfur, and silicon atoms, examples of the hydrocarbylene group containing at least one species selected from the group consisting of nitrogen, oxygen, sulfur, and silicon atoms include a group represented by -CH=N-CH=CH-, a group represented by -CH=N-CH₂-CH₂-, a group represented by -CH₂-CH₂-O-CH₂-CH₂-, a group represented by -CH₂-CH₂-S-CH₂-CH₂-, a group represented by -CH₂-CH₂-SiH₂-CH₂-CH₂-, a group represented by -CH₂-CH₂-SiMe₂-CH₂-CH₂-, a group represented by -CH₂-CH₂-SiEt₂-CH₂-CH₂-, and the like.

Preferably, R¹ and R² are alkyl groups or are bonded to each other to form an alkylene group. More preferably, R¹ and R² are alkyl groups. Still more preferably, R¹ and R² are a methyl group or an ethyl group.

When R¹ and R² in General Formula (2) above are hydrocarbyl groups, specific examples of groups represented by General Formula (2) above include dialkylamino groups such as a dimethylamino group, a diethylamino group, an ethylmethylamino group, a di-n-propylamino group, a diisopropylamino group, a di-n-butylamino group, a diisobutylamino group, a di-sec-butylamino group, and a di-tert-butylamino group; diarylamino groups such as a diphenylamino group; and the like. Among these, dialkylamino groups are preferred, and a dimethylamino group, a diethylamino group, and a di-n-butylamino group are more preferred.

When R¹ and R² in General Formula (2) above are each a hydrocarbyl group having a hydrocarbyloxy group as a substituent, specific examples of groups represented by General Formula (2) above include di(alkoxyalkyl)amino groups such as a di(methoxymethyl)amino group and a di(ethoxymethyl)amino group, and the like.

When R¹ and R² in General Formula (2) above are trihydrocarbylsilyl groups, specific examples of groups represented by General Formula (2) above include trialkylsilyl group-containing amino groups such as a bis(trimethylsilyl)amino group, a bis(tert-butyldimethylsilyl) amino group, and an N-trimethylsilyl-N-methylamino group, and the like.

When R¹ and R² in General Formula (2) above are bonded to each other to form a hydrocarbylene group, specific examples of groups represented by General Formula (2) above include 1-alkyleneimino groups such as a 1-trimethyleneimino group, a 1-pyrrolidino group, a 1-piperidino group, a 1-hexamethyleneimino group, a 1-heptamethyleneimino group, a 1-octamethyleneimino group, a 1-decamethyleneimino group, and a 1-dodecamethyleneimino group, and the like.

When R¹ and R² in General Formula (2) above are bonded to each other to form a hydrocarbylene group containing a nitrogen atom and/or an oxygen atom, specific examples of groups represented by General Formula (2) above include a 1-imidazolyl group, a 4,5-dihydro-1-imidazolyl group, a morpholino group, and the like.

The groups represented by General Formula (2) above are preferably dialkylamino groups and 1-alkyleneimino groups, more preferably dialkylamino groups, still more preferably a dimethylamino group, a diethylamino group, and a di-n-butylamino group.

Examples of the hydrocarbyloxy group which can form X², X³, and X⁴ in General Formula (1) above include alkoxy groups such as a methoxy group, an ethoxy group, an n-propoxy group, an isopropoxy group, an n-butoxy group, a sec-butoxy group, and a tert-butoxy group; aryloxy groups such as a phenoxy group and a benzyloxy group; and the like.

Examples of the hydrocarbyl group which can form X², X³, and X⁴ in General Formula (1) above include alkyl groups such as a methyl group, an ethyl group, an n-propyl group, an isopropyl group, an n-butyl group, a sec-butyl group, and a tert-butyl group; aryl groups such as a phenyl group, a 4-methyl-1-phenyl group, and a benzyl group; and the like.

If the hydrocarbyl group which can form X², X³, and X⁴ has a substituent, examples thereof include hydrocarbyl groups having a hydrocarbyloxy group as a substituent. Examples thereof include alkoxyalkyl groups such as a methoxymethyl group, an ethoxymethyl group, and an ethoxyethyl group, and the like.

If in General Formula (1) above, X¹ is a chemical single bond and one of X², X³, and X⁴ is a substituted amino group, specific examples of the vinyl compound containing a silicon atom-containing functional group represented by General Formula (1) above include (dialkylamino)dialkylvinylsilanes such as (dimethylamino)dimethylvinylsilane, (ethylmethylamino)dimethylvinylsilane, (di-n-propylamino)dimethylvinylsilane, (diisopropylamino)dimethylvinylsilane, (dimethylamino)diethylvinylsilane, (ethylmethylamino)diethylvinylsilane, (di-n-propylamino)diethylvinylsilane, and (diisopropylamino)diethylvinylsilane; [bis(trialkylsilyl)amino]dialkylvinylsilanes such as [bis(trimethylsilyl)amino]dimethylvinylsilane, [bis(t-butyldimethylsilyl)amino]dimethylvinylsilane, [bis(trimethylsilyl)amino]diethylvinylsilane, and [bis(t-butyldimethylsilyl)amino]diethylvinylsilane; (dialkylamino)di(alkoxyalkyl)vinylsilanes such as (dimethylamino)di(methoxymethyl)vinylsilane, (dimethylamino)di(methoxyethyl)vinylsilane, (dimethylamino)di(ethoxymethyl)vinylsilane, (dimethylamino)di(ethoxyethyl)vinylsilane, (diethylamino)di(methoxymethyl)vinylsilane, (diethylamino)di(methoxyethyl)vinylsilane, (diethylamino)di(ethoxymethyl)vinylsilane, and (diethylamino)di(ethoxyethyl)vinylsilane; cyclic aminodialkylvinylsilane compounds such as pyrrolidinodimethylvinylsilane, piperidinodimethylvinylsilane, hexamethyleneiminodimethylvinylsilane, 4,5-dihydroimidazolyldimethylvinylsilane, and morpholinodimethylvinylsilane; and the like.

If in General Formula (1) above, X¹ is a hydrocarbylene group and one of X², X³, and X⁴ is a substituted amino group, specific examples of the vinyl compound containing a silicon atom-containing functional group represented by General Formula (1) above include (dialkylamino)dialkylvinylphenylsilanes such as (dimethylamino)dimethyl-4-vinylphenylsilane, (dimethylamino)dimethyl-3-vinylphenylsilane, (diethylamino)dimethyl-4-vinylphenylsilane, (diethylamino)dimethyl-3-vinylphenylsilane, (di-n-propylamino)dimethyl-4-vinylphenylsilane, (di-n-propylamino)dimethyl-3-vinylphenylsilane, (di-n-butylamino)dimethyl-4-vinylphenylsilane, (di-n-butylamino)dimethyl-3-vinylphenylsilane, (dimethylamino)diethyl-4-vinylphenylsilane, (dimethylamino)diethyl-3-vinylphenylsilane, (diethylamino)diethyl-4-vinylphenylsilane, (diethylamino)diethyl-3-vinylphenylsilane, (di-n-propylamino)diethyl-4-vinylphenylsilane, (di-n-propylamino)diethyl-3-vinylphenylsilane, (di-n-butylamino)diethyl-4-vinylphenylsilane, and (di-n-butylamino)diethyl-3-vinylphenylsilane; and the like.

If in General Formula (1) above, X¹ is a chemical single bond and two of X², X³, and X⁴ are substituted amino groups, specific examples of the vinyl compound containing a silicon atom-containing functional group represented by General Formula (1) above include bis(dialkylamino)alkylvinylsilanes such as bis(dimethylamino)methylvinylsilane, bis(diethylamino)methylvinylsilane, bis(di-n-propylamino)methylvinylsilane, bis(di-n-butylamino)methylvinylsilane, bis(dimethylamino)ethylvinylsilane, bis(diethylamino)ethylvinylsilane, bis(di-n-propylamino)ethylvinylsilane, and bis(di-n-butylamino)ethylvinylsilane; bis[bis(trialkylsilyl)amino]alkylvinylsilanes such as bis[bis(trimethylsilyl)amino]methylvinylsilane, bis[bis(tert-butyldimethylsilyl)amino]methylvinylsilane, bis[bis(trimethylsilyl)amino]ethylvinylsilane, and bis[bis(tert-butyldimethylsilyl)amino]ethylvinylsilane; bis(dialkylamino)alkoxyalkylsilanes such as bis(dimethylamino)methoxymethylvinylsilane, bis(dimethylamino)methoxyethylvinylsilane, bis(dimethylamino)ethoxymethylvinylsilane, bis(dimethylamino)ethoxyethylvinylsilane, bis(diethylamino)methoxymethylvinylsilane, bis(diethylamino)methoxyethylvinylsilane, bis(diethylamino)ethoxymethylvinylsilane, and bis(dimethylamino)ethoxyethylvinylsilane; bis(cyclic amino)alkylvinylsilane compounds such as bis(pyrrolidino)methylvinylsilane, bis(piperidino)methylvinylsilane, bis(hexamethyleneimino)methylvinylsilane, bis(4,5-dihydroimidazolyl)methylvinylsilane, and bis(morpholino)methylvinylsilane; and the like.

If in General Formula (1) above, X¹ is a hydrocarbylene group and two of X², X³, and X⁴ are substituted amino groups, specific examples of the vinyl compound containing a silicon atom-containing functional group represented by General Formula (1) above include bis(dialkylamino)alkylvinylphenylsilanes such as bis(dimethylamino)methyl-4-vinylphenylsilane, bis(dimethylamino)methyl-3-vinylphenylsilane, bis(diethylamino)methyl-4-vinylphenylsilane, bis(diethylamino)methyl-3-vinylphenylsilane, bis(di-n-propylamino)methyl-4-vinylphenylsilane, bis(di-n-propylamino)methyl-3-vinylphenylsilane, bis(di-n-butylamino)methyl-4-vinylphenylsilane, bis(di-n-butylamino)methyl-3-vinylphenylsilane, bis(dimethylamino)ethyl-4-vinylphenylsilane, bis(dimethylamino)ethyl-3-vinylphenylsilane, bis(diethylamino)ethyl-4-vinylphenylsilane, bis(diethylamino)ethyl-3-vinylphenylsilane, bis(di-n-propylamino)ethyl-4-vinylphenylsilane, bis(di-n-propylamino)ethyl-3-vinylphenylsilane, bis(di-n-butylamino)ethyl-4-vinylphenylsilane, and bis(di-n-butylamino)ethyl-3-vinylphenylsilane; and the like.

If in General Formula (1) above, X¹ is a chemical single bond and three of X², X³, and X⁴ are substituted amino groups, specific examples of the vinyl compound containing a silicon atom-containing functional group represented by General Formula (1) include tris(dialkylamino)vinylsilanes such as tris(dimethylamino)vinylsilane, tris(diethylamino)vinylsilane, tris(di-n-propylamino)vinylsilane, and tris(di-n-butylamino)vinylsilane; and the like.

If in General Formula (1) above, X¹ is a hydrocarbylene group and three of X², X³, and X⁴ are substituted amino groups, specific examples of the vinyl compound containing a silicon atom-containing functional group represented by General Formula (1) above include tris(dialkylamino)vinylphenylsilanes such as tris(dimethylamino)-4-vinylphenylsilane, tris(dimethylamino)-3-vinylphenylsilane, tris(diethylamino)-4-vinylphenylsilane, tris(diethylamino)-3-vinylphenylsilane, tris(di-n-propylamino)-4-vinylphenylsilane, tris(di-n-propylamino)-3-vinylphenylsilane, tris(di-n-butylamino)-4-vinylphenylsilane, and tris(di-n-butylamino)-3-vinylphenylsilane; and the like.

If in General Formula (1) above, X¹ is a chemical single bond and all of X², X³, and X⁴ are not a substituted amino group, specific examples of the vinyl compound containing a silicon atom-containing functional group represented by General Formula (1) above include trialkoxyvinylsilanes such as trimethoxyvinylsilane, triethoxyvinylsilane, and tripropoxyvinylsilane; dialkoxyalkylvinylsilanes such as methyldimethoxyvinylsilane and methyldiethoxyvinylsilane; dialkoxyarylvinylsilanes such as di(tert-pentoxy)phenylvinylsilane and di(tert-butoxy)phenylvinylsilane; monoalkoxydialkylvinylsilanes such as dimethylmethoxyvinylsilane; monoalkoxydiarylvinylsilanes such as tert-butoxydiphenylvinylsilane and tert-pentoxydiphenylvinylsilane; monoalkoxyalkylarylvinylsilanes such as tert-butoxymethylphenylvinylsilane and tert-butoxyethylphenylvinylsilane; substituted alkoxyvinylsilane compounds such as tris(β-methoxyethoxy)vinylsilane; and the like.

Among these compounds represented by General Formula (1) above, preferred are compounds where X¹ is a chemical single bond, more preferred are those where X¹ is a chemical single bond and two of X², X³, and X⁴ are substituted amino groups, and particularly preferred are those where X¹ is a chemical single bond and two of X², X³, and X⁴ are dialkylamino groups.

Among these compounds represented by General Formula (1) above, bis(dimethylamino)methylvinylsilane, bis(diethylamino)methylvinylsilane, and bis(di-n-butylamino)methylvinylsilane are preferred, and bis(diethylamino)methylvinylsilane is particularly preferred.

Examples of vinyl compounds containing a functional group interactive with silica other than the compounds represented by General Formula (1) above include bis(trialkylsilyl)aminostyrenes such as 4-N,N-bis(trimethylsilyl)aminostyrene and 3-N,N-bis(trimethylsilyl)aminostyrene; bis(trialkylsilyl)aminoalkylstyrenes such as 4-bis(trimethylsilyl)aminomethylstyrene, 3-bis(trimethylsilyl)aminomethylstyrene, 4-bis(trimethylsilyl)aminoethylstyrene, and 3-bis(trimethylsilyl)aminoethylstyrene; and the like.

When the compound represented by General Formula (1) above is used as the vinyl compound containing a functional group interactive with silica, the conjugated diene polymer (A) includes units represented by General Formula (3) below as the units of the vinyl compound containing a functional group interactive with silica:

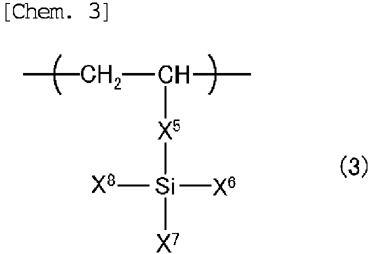

In General Formula (3) above, X⁵ represents a chemical single bond or a hydrocarbylene group, and X⁶, X⁷, and X⁸ each independently represent a hydroxyl group, a substituted amino group, a hydrocarbyloxy group, or an optionally substituted hydrocarbyl group.

In the unit represented by General Formula (3) above, X⁵ corresponds to X¹ in the compound represented by General Formula (1) above, and X⁶, X⁷, and X⁸ correspond to X², X³, and X⁴ in the compound represented by General Formula (1) above, respectively. For this reason, X⁵, X⁶, X⁷, and X⁸ in the unit represented by General Formula (3) above can be the same as X¹, X², X³, and X⁴ in the compound represented by General Formula (1) above. When the compound represented by General Formula (1) above where at least one of X², X³, and X⁴ is a substituted amino group or a hydrocarbyloxy group is used, at least one of X², X³, and X⁴ can be converted into a hydroxyl group as a result of hydrolysis of the substituted amino group or the hydrocarbyloxy group at any timing in any step.

The proportion of units of the vinyl compound containing a functional group interactive with silica in the conjugated diene polymer (A) is preferably 0.001 to 10.000% by weight, more preferably 0.001 to 3.000% by weight relative to 100% by weight of the total amount of monomers.

The conjugated diene polymer (A) may also contain different monomer units other than the monomer units. Examples of a different compound forming such different monomer units include linear olefin compounds such as ethylene, propylene, and 1-butene; cyclic olefin compounds such as cyclopentene and 2-norbornene; non-conjugated diene compounds such as 1,5-hexadiene, 1,6-heptadiene, 1,7-octadiene, dicyclopentadiene, and 5-ethylidene-2-norbornene; and the like.

In the conjugated diene polymer (A), the bonding form of the monomer units can be a variety of bonding forms such as a block form, a tapered form, and a random form, and preferred is a random form. When the random form is selected, a cross-linked rubber having further enhanced fuel efficiency can be obtained.

Preferably, the conjugated diene polymer (A) used in the present invention contains a modifying group formed by modifying a terminal of the polymer chain of the conjugated diene polymer with a modifier.

A preferred modifying group contains a functional group interactive with silica because it can appropriately enhance compatibility with a filler such as silica and a cross-linked rubber having enhanced strength properties, wear resistance, and fuel efficiency can be obtained. Here, the functional group interactive with silica indicates a functional group which can form a covalent bond between the functional group and the surface of silica or can cause an intermolecular force weaker than a covalent bond (such as ion-dipole interaction, dipole-dipole interaction, hydrogen bond, or van der Waals force). Examples of such a functional group interactive with silica include, but not particularly limited to, nitrogen atom-containing functional groups, silicon atom-containing functional groups, oxygen atom-containing functional groups, and the like.

From the viewpoint of high interaction with silica, preferred modifiers for forming the modifying group are silicon atom-containing modifiers having a silicon atom-containing functional group and nitrogen atom-containing modifiers having a nitrogen atom-containing functional group, and more preferred modifiers are silicon atom-containing modifiers. Examples of silicon atom-containing modifiers include siloxane compounds, hydrocarbyloxysilane compounds, and the like. Examples of nitrogen atom-containing modifiers include N,N-disubstituted aminoalkyl(meth)acrylamides such as dimethylaminoethylacrylamide, diethylaminoethylacrylamide, dimethylaminopropylacrylamide, diethylaminopropylacrylamide, dimethylaminobutylacrylamide, diethylaminobutylacrylamide, dimethylaminoethylmethacrylamide, diethylaminoethylmethacrylamide, dimethylaminopropylmethacrylamide, diethylaminopropylmethacrylamide, dimethylaminobutylmethacrylamide, and diethylaminobutylmethacrylamide; amino group-containing alkoxysilane compounds such as [3-(dimethylamino)propyl]trimethoxysilane, [3-(diethylamino)propyl]trimethoxysilane, [3-(dimethylamino)propyl]triethoxysilane, [3-(diethylamino)propyl]triethoxysilane, [3-(ethylmethylamino)propyl]trimethoxysilane, and [3-(ethylmethylamino)propyl]triethoxysilane; and pyrrolidone compounds such as N-phenyl-2-pyrrolidone, N-methyl-2-pyrrolidone, N-ethyl-2-pyrrolidone, and 1-cyclohexyl-2-pyrrolidone.

The siloxane compounds are those having a siloxane structure (-Si-O-) as the main chain structure, and are not particularly limited. Preferred are organosiloxanes having an organic group in a side chain, and more preferred is a polyorganosiloxane represented by General Formula (4) below:

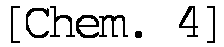

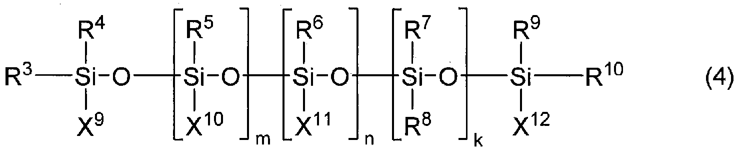

In General Formula (4) above, R³ to R¹⁰ are each a C₁ to C₆ alkyl group or a C₆ to C₁₂ aryl group, and may be the same or different. X⁹ and X¹² are each one group selected from the group consisting of C₁ to C₆ alkyl groups, C₆ to C₁₂ aryl groups, C₁ to C₅ alkoxy groups, and C₄ to C₁₂ groups having an epoxy group, and may be the same or different. X¹⁰ is a C₁ to C₅ alkoxy group or a C₄ to C₁₂ group having an epoxy group. When a plurality of X¹⁰ is present, these may be the same or different. X¹¹ is a group containing 2 to 20 repeating units of an alkylene glycol. When a plurality of X¹¹ is present, these may be the same or different. m is an integer of 0 to 200, n is an integer of 0 to 200, k is an integer of 0 to 200, and m+n+k is 1 or more.

In the polyorganosiloxane represented by General Formula (4) above, examples of the C₁ to C₆ alkyl groups which can form R³ to R¹⁰, X⁹, and X¹² in General Formula (4) above include a methyl group, an ethyl group, an n-propyl group, an isopropyl group, a butyl group, a pentyl group, a hexyl group, a cyclohexyl group, and the like. Examples of the C₆ to C₁₂ aryl groups include a phenyl group, a methylphenyl group, and the like. Among these, methyl and ethyl groups are preferred from the viewpoint of ease in production of the polyorganosiloxane itself.

In the polyorganosiloxane represented by General Formula (4) above, examples of the C₁ to C₅ alkoxy groups which can form X⁹, X¹⁰, and X¹² include a methoxy group, an ethoxy group, a propoxy group, an isopropoxy group, a butoxy group, and the like. Among these, methoxy and ethoxy groups are preferred from the viewpoint of ease in production of the polyorganosiloxane itself.

Furthermore, in the polyorganosiloxane represented by General Formula (4) above, examples of the C₄ to C₁₂ groups having an epoxy group which can form X⁹, X¹⁰, and X¹² include groups represented by General Formula (5) below:

-Z¹-Z²-E¹ (5)

In General Formula (5) above, Z¹ is a C₁ to C₁₀ alkylene or alkylarylene group, Z² is a methylene group, a sulfur atom, or an oxygen atom, and E¹ is a C₂ to C₁₀ hydrocarbon group having an epoxy group.

The groups represented by General Formula (5) above are preferably those where Z² is an oxygen atom, more preferably those where Z² is an oxygen atom and E¹ is a glycidyl group, particularly preferably those where Z¹ is a C₁ to C₃ alkylene group, Z² is an oxygen atom, and E¹ is a glycidyl group.

In the polyorganosiloxane represented by General Formula (4) above, X⁹ and X¹² are preferably a C₄ to C₁₂ group containing an epoxy group or a C₁ to C₆ alkyl group among the groups described above. X¹⁰ is preferably a C₄ to C₁₂ group containing an epoxy group among the groups described above. Furthermore, it is more preferred that X⁹ and X¹² be C₁ to C₆ alkyl groups, and X¹⁰ be a C₄ to C₁₂ group containing an epoxy group.

In the polyorganosiloxane represented by General Formula (4) above, X¹¹, namely, the group containing 2 to 20 repeating units of an alkylene glycol is preferably a group represented by General Formula (6) below:

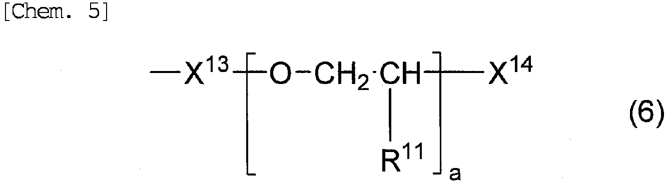

In General Formula (6) above, a is an integer of 2 to 20, X¹³ is a C₂ to C₁₀ alkylene or alkylarylene group, R¹¹ is a hydrogen atom or a methyl group, and X¹⁴ is a C₁ to C₁₀ alkoxy or aryloxy group. Among these, preferred groups are those where a is an integer of 2 to 8, X¹³ is a C₃ alkylene group, R¹¹ is a hydrogen atom, and X¹⁴ is a methoxy group.

In the polyorganosiloxane represented by General Formula (4) above, m is an integer of 0 to 200, preferably 20 to 150, more preferably 30 to 120. With m of 200 or less, the polyorganosiloxane itself represented by General Formula (4) above can be more readily produced, and can be more easily handled because the viscosity is not excessively high.

In the polyorganosiloxane represented by General Formula (4) above, n is an integer of 0 to 200, preferably 0 to 150, more preferably 0 to 120. k is an integer of 0 to 200, preferably 0 to 150, more preferably 0 to 130. The total numeric number of m, n, and k is 1 or more, preferably 2 to 400, more preferably 20 to 300, particularly preferably 30 to 250. If the total numeric number of m, n, and k is 1 or more, in the production process of the conjugated diene polymer, the reaction of the polyorganosiloxane represented by General Formula (4) above with an active terminal of the conjugated diene polymer readily proceeds. Furthermore, if the total numeric number of m, n, and k is 400 or less, the polyorganosiloxane itself represented by General Formula (4) above can be more readily produced, and can be more easily handled because the viscosity is not excessively high.

As the modifier for forming a modifying group, a nitrogen atom-containing modifier having a nitrogen atom-containing functional group may be used, and for example, a hydrocarbyloxysilane compound containing a nitrogen atom may be used.

The hydrocarbyloxysilane compound containing a nitrogen atom is a silicon-containing compound having at least one group containing a nitrogen atom and at least one hydrocarbyloxy group. Such a hydrocarbyloxysilane compound containing a nitrogen atom is not particularly limited, and a compound described in WO 2019/189204 can be used.

For example, the hydrocarbyloxysilane compound containing a nitrogen atom suitably used is a compound represented by General Formula (7) below:

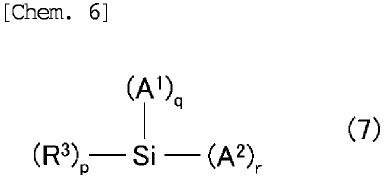

In General Formula (7), R³ is a hydrocarbyl group, A¹ is a hydrocarbyloxy group, A² is a group containing a nitrogen atom, p is an integer of 0 to 2, q is an integer of 1 to 3, r is an integer of 1 to 3, and p+q+r=4. The group containing a nitrogen atom, which is represented by A², may be a group containing a primary amino group having an active hydrogen atom and/or a secondary amino group having an active hydrogen atom, or may be a different group containing a nitrogen atom other than this.

A compound represented by General Formula (8) below is also suitably used as the hydrocarbyloxysilane compound containing a nitrogen atom:

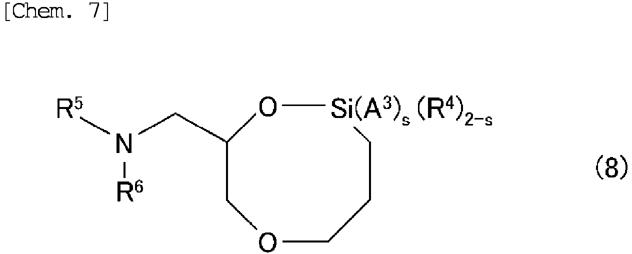

In General Formula (8), A³ is a hydrocarbyloxy group, R⁴ represents an optionally substituted hydrocarbon group, R⁵ and R⁶ each independently represent an optionally substituted hydrocarbon group; R⁵ and R⁶ may be bonded to each other to form a ring structure together with the nitrogen atom bonded thereto; when R⁵ and R⁶ form a ring structure, R⁵ and R⁶ may form a ring structure with the nitrogen atom bonded thereto and a heteroatom other than the nitrogen atom bonded thereto. s is an integer of 0 to 2.

As the nitrogen atom-containing modifier, preferably, a carbonyl group-containing compound containing a nitrogen atom is also used. The carbonyl group-containing compound containing a nitrogen atom is a compound having at least one group containing a nitrogen atom and at least one carbonyl group. Such a carbonyl group-containing compound containing a nitrogen atom is not particularly limited, and a compound represented by General Formula (9) below can be suitably used:

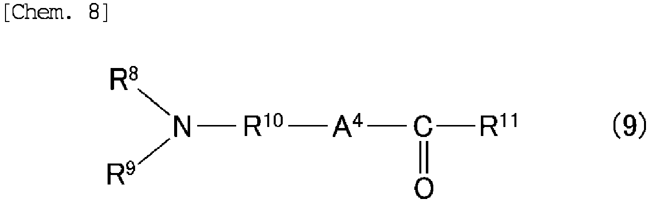

In General Formula (9), R⁸ and R⁹ each independently represent an optionally substituted hydrocarbyl group, R¹⁰ represents a hydrocarbylene group, and R¹¹ represents an optionally substituted hydrocarbyl group or a hydrogen atom. A⁴ represents a chemical single bond, an oxygen atom, or - NR¹²- (where R¹² represents a hydrocarbyl group or a hydrogen atom). Part of R⁸ and R⁹ may be bonded to each other to form a hydrocarbylene group optionally having a nitrogen atom and/or an oxygen atom. Part of R¹¹ may be bonded to part of R⁸ or R⁹ to form a hydrocarbylene group optionally having a nitrogen atom and/or an oxygen atom.

The optionally substituted hydrocarbyl group in R⁸, R⁹, and R¹¹ is a hydrocarbyl group or a substituted hydrocarbyl group. Examples of the substituted hydrocarbyl group include hydrocarbyl groups substituted by a hydrocarbyloxy group, hydrocarbyl groups substituted by a substituted amino group, and the like.

Examples of hydrocarbyl groups include alkyl groups, alkenyl groups, alkynyl groups, aryl groups, aralkyl groups, and the like. The alkyl groups are preferably C₁ to C₁₂ alkyl groups, and examples thereof include a methyl group, an ethyl group, an n-propyl group, an isopropyl group, an n-butyl group, a sec-butyl group, a tert-butyl group, an n-pentyl group, an n-hexyl group, an n-octyl group, an n-dodecyl group, a cyclopentyl group, a cyclohexyl group, and the like. The alkenyl groups are preferably C₂ to C₁₂ alkenyl groups, and examples thereof include a vinyl group, an allyl group, a 1-propenyl group, an isopropenyl group, and the like. The alkynyl groups are preferably C₂ to C₁₂ alkynyl groups, and examples thereof include an ethynyl group, 2-propynyl group, and the like. The aryl groups are preferably C₆ to C₁₂ aryl groups, and examples thereof include a phenyl group, a methylphenyl group, an ethylphenyl group, a benzyl group, a tolyl group, a xylyl group, and the like. The aralkyl groups are preferably C₇ to C₁₃ aralkyl groups, and examples thereof include a benzyl group, and the like.

Examples of the hydrocarbyl groups substituted by a hydrocarbyloxy group include alkoxyalkyl groups such as a methoxymethyl group, an ethoxymethyl group, and an ethoxyethyl group, and the like.

Examples of the hydrocarbyl groups substituted by a substituted amino group include (N,N-dialkylamino)alkyl groups such as an N,N-dimethylaminomethyl group, a 2-(N,N-dimethylamino)ethyl group, a 2-(N,N-diethylamino)ethyl group, a 3-(N,N-dimethylamino)propyl group, and a 3-(N,N-diethylamino)propyl group; (N,N-dialkylamino)aryl groups such as a 4-(N,N-dimethylamino)phenyl group, a 3-(N,N-dimethylamino)phenyl group, a 4-(N,N-diethylamino)phenyl group, and a 3-(N,N-diethylamino)phenyl group; (N,N-dialkylamino)alkylaryl groups such as a 4-(N,N-dimethylamino)methylphenyl group and a 4-[2-(N,N-dimethylamino)ethyl]phenyl group; alkyl groups substituted by a cyclic amino group, such as a 3-(1-pyrrolidinyl)propyl group, a 3-(1-piperidinyl)propyl group, and a 3-(1-imidazolyl)propyl group; aryl groups substituted by a cyclic amino group, such as a 4-(1-pyrrolidinyl)phenyl group, a 4-(1-piperidinyl)phenyl group, and a 4-(1-imidazolyl)phenyl group; and alkyl aryl groups substituted by a cyclic amino group, such as a 4-[2-(1-pyrrolidinyl)ethyl]phenyl group, a 4-[2-(1-piperidinyl)ethyl]phenyl group, and a 4-[2-(1-imidazolyl)ethyl]phenyl group.

Examples of the hydrocarbylene group for R¹⁰ include alkylene groups, alkenediyl groups, arylene groups, arylene-alkylene groups, and the like. Examples of alkylene groups include a methylene group, an ethylene group, a propylene group, a tetramethylene group, a pentamethylene group, a hexamethylene group, a heptamethylene group, an octamethylene group, a 2,2,4-trimethylhexane-1,6-diyl group, and the like. Examples of alkenediyl groups include a pentan-2-ene-1,5-diyl group, and the like. Examples of arylene groups include a phenylene group, a naphthylene group, a biphenylene group, and the like. Examples of arylene-alkylene groups include a phenylene-alkylene group, a naphthylene-alkylene group, a biphenylene-alkylene group, and the like.

In General Formula (9) above, A⁴ is a chemical single bond, an oxygen atom, or -NR¹²- (where R¹² represents a hydrocarbyl group or a hydrogen atom). A⁴ is preferably an oxygen atom or a group represented by -NR¹²- (where R¹² represents a hydrocarbylene group having 1 or more and 5 or less carbon atoms or a hydrogen atom), more preferably an oxygen atom or a group represented by -NH-, still more preferably a group represented by -NH-.

Examples of the compound represented by General Formula (9) above where A⁴ is an oxygen atom include 2-(dihydrocarbylamino)ethyl acrylates such as 2-(dimethylamino)ethyl acrylate and 2-(diethylamino)ethyl acrylate; 3-(dihydrocarbylamino)propyl acrylates such as 3-(dimethylamino)propyl acrylate; 2-(dihydrocarbylamino)ethyl methacrylates such as 2-(dimethylamino)ethyl methacrylate and 2-(diethylamino)ethyl methacrylate; 3-(dihydrocarbylamino)propyl methacrylates such as 3-(dimethylamino)propyl methacrylate; and the like.

Examples of the compound represented by General Formula (9) above where A⁴ is -NR¹²- (where R¹² represents a hydrocarbyl group or a hydrogen atom) include N-(2-dihydrocarbylaminoethyl)acrylamides such as N-(2-dimethylaminoethyl)acrylamide and N-(2-diethylaminoethyl)acrylamide; N-(3-dihydrocarbylaminopropyl)acrylamides such as N-(3-dimethylaminopropyl)acrylamide and N-(3-diethylaminopropyl)acrylamide; N-(4-dihydrocarbylaminobutyl)acrylamides such as N-(4-dimethylaminobutyl)acrylamide and N-(4-diethylaminobutyl)acrylamide; N-(2-dihydrocarbylaminoethyl)methacrylamides such as N-(2-dimethylaminoethyl)methacrylamide and N-(2-diethylaminoethyl)methacrylamide; N-(3-dihydrocarbylaminopropyl)methacrylamides such as N-(3-dimethylaminopropyl)methacrylamide and N-(3-diethylaminopropyl)methacrylamide; N-(4-dihydrocarbylaminobutyl)methacrylamides such as N-(4-dimethylaminobutyl)methacrylamide and N-(4-diethylaminobutyl)methacrylamide; and the like.

The weight average molecular weight (Mw) of the conjugated diene polymer (A) used in the present invention is not particularly limited, and is preferably 50,000 to 5,000,000, more preferably 75,000 to 3,000,000, particularly preferably 100,000 to 1,000,000 as a value against polystyrene standards in measurement by gel permeation chromatography. When the weight average molecular weight (Mw) of the conjugated diene polymer (A) falls within these ranges above, the oil-extended conjugated diene polymer can form a cross-linked rubber having high processability and having further enhanced low-temperature properties and bloom resistance.

The molecular weight distribution of the conjugated diene polymer (A) used in the present invention, which is represented as a ratio (Mw/Mn) of the weight average molecular weight (Mw) to the number average molecular weight (Mn), is preferably 1.1 to 3.0, more preferably 1.2 to 2.5, particularly preferably 1.2 to 2.2. When the molecular weight distribution (Mw/Mn) of the conjugated diene polymer (A) falls within these ranges above, the oil-extended conjugated diene polymer can form a cross-linked rubber having high processability and having further enhanced low-temperature properties and bloom resistance.

### [Oil (B)]

The oil (B) used in the present invention is an extender oil for extending the conjugated diene polymer (A), the oil satisfying (1) below and (2) described later.
(1) A ratio [X_{UV}/X_{RI}] of a UV detection area [X_{UV}] to an RI detection area [X_{RI}] (hereinafter, referred to as "UV/RI detection area ratio [X_{UV}/X_{RI}]" in some cases) is 10 or less, where in gel permeation chromatography analysis using a differential refractive index detector and an ultraviolet absorption detector, the elution area derived from the oil (B) in an elution profile obtained using the differential refractive index detector is defined as an RI detection area [X_{RI}], and the elution area derived from the oil (B) in an elution profile obtained using the ultraviolet absorption detector is defined as a UV detection area [X_{UV}].

From gel permeation chromatography analysis, an elution profile indicating the relation between the elution time (unit: sec) and the detection intensity (unit: mV) is obtained. Specifically, the UV/RI detection area ratio [X_{UV}/X_{RI}] can be measured by the method described in Examples. In this specification, the elution area in the elution profile indicates the area (unit: mV × sec) of a portion defined by the elution curve and the base line.

If the UV/RI detection area ratio [X_{UV}/X_{RI}] is more than 10, it is difficult to obtain a cross-linked rubber having enhanced low-temperature properties.

Usually, in comparison between detection using an ultraviolet absorption detector (UV detector) and that using a differential refractive index detector (RI detector) in gel permeation chromatography analysis, the detection intensity obtained using the UV detector tends to be relatively higher in measurement of a sample which is easy to absorb ultraviolet light, while the detection intensity obtained using the RI detector tends to be relatively higher in measurement of a sample which is difficult to absorb ultraviolet light. For this reason, the UV/RI detection area ratio [X_{UV}/X_{RI}] tends to be larger as a component easier to absorb ultraviolet light is present in the oil in a higher ratio.

Examples of the component easy to absorb ultraviolet light which can be contained in the oil include components having unsaturated bonds. In particular, a component containing an aromatic ring is very easy to absorb ultraviolet light. For this reason, when a large amount of such a component containing an aromatic ring is present in the oil, the UV/RI detection area ratio [X_{UV}/X_{RI}] tends to be excessively high.

The UV/RI detection area ratio [X_{UV}/X_{RI}] of the oil (B) used in the present invention can be 10 or less, and is not particularly limited. The UV/RI detection area ratio [X_{UV}/X_{RI}] is within the range of preferably 0 to 5, more preferably 0.01 to 3, still more preferably 0.1 to 2, particularly preferably 0.15 to 1.5. By using the oil (B) where the UV/RI detection area ratio [X_{UV}/X_{RI}] is within these ranges above, a cross-linked rubber having further enhanced low-temperature properties and bloom resistance can be obtained.

The oil (B) used in the present invention satisfies (2) below in addition to (1) above.

(2) The oil (B) shows one or more melting peaks measured by differential scanning calorimetry, and among the melting peaks showing a heat of fusion of 10% or more of the total heat of fusion measured by differential scanning calorimetry, an extrapolated initial melting temperature [Tᵢₘ₋ₘₐₓ] of a melting peak having the highest peak temperature (hereinafter, referred to as "extrapolated initial melting temperature [Tᵢₘ₋ₘₐₓ] of a melting peak in the highest temperature region" in some cases) is 23°C or less.

The extrapolated initial melting temperature [Tᵢₘ₋ₘₐₓ] of a melting peak in the highest temperature region is a temperature corresponding to the initial melting temperature of the component having the highest melting point among the components constituting the oil. Specifically, the extrapolated initial melting temperature [Tᵢₘ₋ₘₐₓ] of a melting peak in the highest temperature region can be measured by the method described in Examples. In this specification, whether the melting peak shows a heat of fusion of 10% or more of the total heat of fusion is determined based on the chart area corresponding to the heat of fusion of the melting peak (the area of a portion defined by the peak profile of the melting peak and the base line).

When the extrapolated initial melting temperature [Tᵢₘ₋ₘₐₓ] of the melting peak in the highest temperature region is more than 23°C, it is difficult to obtain a cross-linked rubber having enhanced bloom resistance.

The extrapolated initial melting temperature [Tᵢₘ₋ₘₐₓ] of the melting peak in the highest temperature region can be 23°C or less, and is not particularly limited. The extrapolated initial melting temperature [Tᵢₘ₋ₘₐₓ] is within the range of preferably -50°C to 10°C, more preferably - 45°C to 5°C, still more preferably -40°C to 0°C, particularly preferably - 35°C to -5°C.

The oil (B) used in the present invention can be any oil as long as it satisfies (1) and (2) above, and is not particularly limited. Examples thereof include vegetable oil, animal oil, mineral oil, synthetic oil, and the like. Among these, vegetable oil is preferred.

Preferably, the oil (B) used in the present invention contains triacylglycerol (a compound formed by bonding one molecule of glycerol and three molecules of a fatty acid via ester bonds) as the main component. The content of triacylglycerol in the oil (B) is not particularly limited, and is preferably 30 to 100% by weight, more preferably 60 to 100% by weight, still more preferably 90 to 100% by weight. The three molecules of a fatty acid constituting one molecule of triacylglycerol may be the same or different. The oil (B) may contain a single kind of triacylglycerol, or may contain a few kinds of triacylglycerol.

Examples of the fatty acid forming triacylglycerol include unsaturated fatty acids, saturated fatty acids, and a mixture thereof. When the oil (B) contains triacylglycerol, the proportion of an unsaturated fatty acid in the total fatty acids forming the triacylglycerol contained in the oil (B) is not particularly limited, and is preferably 60 to 100% by weight, more preferably 85 to 99.9% by weight, still more preferably 90 to 99.5% by weight. The proportion of a saturated fatty acid in the total fatty acids forming the triacylglycerol is not particularly limited, and is preferably 0 to 40% by weight, more preferably 0.1 to 15% by weight, still more preferably 0.5 to 10% by weight.

Examples of the oil (B) used in the present invention include linseed oil, tung oil, high linoleic safflower oil, grape oil, soybean oil, high oleic safflower oil, high linoleic sunflower oil, grapeseed oil, rapeseed oil, corn oil, cottonseed oil, high oleic rapeseed oil, high oleic sunflower oil, castor oil, olive oil, peanut oil, rice bran oil, sesame oil, palm olein, and fractions and processed products of these oils. Among these, linseed oil, tung oil, high linoleic safflower oil, grape oil, soybean oil, high oleic safflower oil, high linoleic sunflower oil, grapeseed oil, rapeseed oil, corn oil, and cottonseed oil are preferred, linseed oil, tung oil, high linoleic safflower oil, grape oil, soybean oil, high oleic safflower oil, high linoleic sunflower oil, and grapeseed oil are more preferred, linseed oil, tung oil, high linoleic safflower oil, and grape oil are still more preferred, and linseed oil is particularly preferred.

The iodine number of the oil (B) used in the present invention is not particularly limited, and is preferably 55 to 300 gI₂/100 g, more preferably 80 to 280 gI₂/100 g, still more preferably 110 to 260 gI₂/100 g, particularly preferably 150 to 240 gI₂/100 g, most preferably 170 to 220 gI₂/100 g. By using the oil (B) having an iodine number within these ranges above, a cross-linked rubber having further enhanced low-temperature properties and bloom resistance can be obtained.

In the oil-extended conjugated diene polymer according to the present invention, the content of the oil (B) is 5 to 60 parts by weight relative to 100 parts by weight of the conjugated diene polymer (A). The content of the oil (B) relative to 100 parts by weight of the conjugated diene polymer (A) is not particularly limited, and is preferably 10 to 55 parts by weight, more preferably 15 to 50 parts by weight, still more preferably 20 to 45 parts by weight, particularly preferably 25 to 45 parts by weight. By controlling the content of the oil (B) within these ranges above, the oil-extended conjugated diene polymer can form a cross-linked rubber having high processability and having further enhanced low-temperature properties and bloom resistance.

The Mooney viscosity (ML1+4, 100°C) of the oil-extended conjugated diene polymer according to the present invention is not particularly limited, and is preferably 10 to 200, more preferably 15 to 150, still more preferably 20 to 100, particularly preferably 25 to 80. By controlling the Mooney viscosity within these ranges above, the oil-extended conjugated diene polymer can form a cross-linked rubber having high processability and having further enhanced low-temperature properties and bloom resistance. The Mooney viscosity (ML1+4,100°C) is measured according to JIS K6300.

### <Method of producing oil-extended conjugated diene polymer>

The oil-extended conjugated diene polymer according to the present invention can be produced by extending the conjugated diene polymer (A) with the oil (B).

The oil-extended conjugated diene polymer according to the present invention can be suitably produced by solution polymerization by preparing a solution of the conjugated diene polymer (A), mixing the solution with the oil (B), and then removing volatile components from the resulting mixed solution.

The conjugated diene polymer (A) used in the present invention can be prepared, for example, by polymerizing a monomer mixture containing at least a conjugated diene compound in an inert solvent in the presence of a polymerization initiator. The conjugated diene polymer (A) is preferably polymerized by solution polymerization.

Examples of the conjugated diene compound contained in the monomer mixture include the same conjugated diene compounds as those listed above which can be used to form the conjugated diene polymer (A). Furthermore, the monomer mixture may contain the aromatic vinyl monomer, the vinyl compound containing a functional group interactive with silica, and the different monomers described above as needed.

The inert solvent used in polymerization can be any inert solvent as long as it is usually used in solution polymerization and does not inhibit a polymerization reaction. Specific examples of the inert solvent include linear aliphatic hydrocarbons such as butane, pentane, hexane, heptane, and 2-butene; alicyclic hydrocarbons such as cyclopentane, cyclohexane, and cyclohexene; aromatic hydrocarbons such as benzene, toluene, and xylene; and the like. These inert solvents may be used alone or in combination. The inert solvent is used in an amount providing a monomer concentration of 1 to 50% by weight, preferably 10 to 40% by weight, for example.

The polymerization initiator used in polymerization can be any polymerization initiator as long as it can polymerize a monomer mixture containing a conjugated diene compound. Specific examples thereof include organic alkali metal compounds, organic alkaline earth metal compounds, and polymerization initiators containing a lanthanum-series metal compound as a primary catalyst, and the like. Examples of organic alkali metal compounds include organic lithium compounds, organic sodium compounds, organic potassium compounds, and the like. Specifically, examples thereof include organic monolithium compounds such as n-butyllithium, sec-butyllithium, t-butyllithium, hexyllithium, phenyllithium, and stilbenelithium; organic polyvalent lithium compounds such as dilithimethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; and the like. Examples of organic alkaline earth metal compounds include di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, diketylbarium, and the like. Examples of polymerization initiators containing a lanthanum-series metal compound as a primary catalyst include polymerization initiators containing a lanthanum-series metal salt of a lanthanum-series metal, such as lanthanum, cerium, praseodymium, neodymium, samarium, or gadolinium, and a carboxylic acid, a phosphorus-containing organic acid, or the like as a primary catalyst, and a cocatalyst such as an alkylaluminum compound, an organic aluminum hydride compound, or an organic aluminum halide compound; and the like. Among these polymerization initiators, organic monolithium compounds and organic polyvalent lithium compounds are preferably used, organic monolithium compounds are more preferably used, and n-butyllithium is particularly preferably used. The organic alkali metal compound may be preliminarily reacted with a secondary amine compound such as dibutylamine, dihexylamine, dibenzylamine, pyrrolidine, piperidine, hexamethyleneimine, or heptamethyleneimine, and may be used as an organic alkali metal amide compound. By using an organic alkali metal amide compound as the polymerization initiator, a cross-linked rubber having further enhanced fuel efficiency and wear resistance can be obtained. These polymerization initiators may be used alone or in combination.

Although the amount of the polymerization initiator to be used can be determined according to the molecular weight distribution curve of the target conjugated diene polymer (A), the amount is usually in the range of 1 to 50 mmol, preferably 1.5 to 20 mmol, more preferably 2 to 15 mmol per 1000 g of the monomer(s).

An operation to further add the polymerization initiator may be performed, in which after the polymerization is started, the polymerization initiator is further added to the polymerization system to continue the polymerization. The operation to further add the polymerization initiator can be performed any times at any timing, and the timing and the number of times of the operation can be determined according to the molecular weight distribution curve of the target conjugated diene polymer (A). The further addition operation is performed at a timing after the polymerization conversion ratio reaches preferably 10 to 90%, more preferably 30 to 70%. From the viewpoint of high processability, the vinyl compound containing a functional group interactive with silica is preferably copolymerized after the further addition operation is completed. The amount of the polymerization initiator used per one further addition operation is not particularly limited, and can be determined according to the molecular weight distribution curve of the target conjugated diene polymer (A). The amount is preferably 1 to 99 mol, more preferably 1.2 to 20 mol relative to 1 mol of the polymerization initiator used at the start of polymerization.

The polymerization temperature is in the range of usually -80 to +150°C, preferably 0 to 100°C, more preferably 30 to 90°C. The polymerization can be performed in any manner such as such as a batch or continuous mode. Preferred is a batch method when the conjugated diene compound and the aromatic vinyl compound are copolymerized, because randomness in bonding of conjugated diene monomer units and aromatic vinyl monomer units can be readily controlled.

In polymerization of the monomer mixture containing the conjugated diene compound, a polar compound is preferably added to an inert organic solvent to control the vinyl bond content in conjugated diene monomer units in the conjugated diene polymer (A) to be prepared. Examples of the polar compound include ether compounds such as dibutyl ether and tetrahydrofuran; tertiary amines such as tetramethylethylenediamine; alkali metal alkoxides; phosphine compounds; and the like. Among these, ether compounds and tertiary amines are preferred, tertiary amines are more preferred, and tetramethylethylenediamine is particularly preferred. These polar compounds may be used alone or in combination. The amount of the polar compound to be used can be determined according to the target vinyl bond content, and is preferably 0.001 to 100 mol, more preferably 0.01 to 10 mol relative to 1 mol of the polymerization initiator. When the amount of the polar compound to be used falls within these ranges above, control of the vinyl bond content in the conjugated diene monomer units is facilitated, and failure caused by deactivation of the polymerization initiator hardly occurs.

The conjugated diene polymer (A) used in the present invention may be prepared by a production method comprising: a step of polymerizing a monomer (a1) containing isoprene in an inert solvent in the presence of a polymerization initiator to form a polymer block (A1) having an active terminal; and a step of mixing the polymer block (A1) having an active terminal with a monomer (a2) containing 1,3-butadiene, and continuing the polymerization reaction to form the polymer block (A1) containing isoprene monomer units and a polymer block (A2) containing 1,3-butadiene monomer units that are serially linked to each other. Such a production method to be used can be the production method described in WO 2019/073828, for example.

By using such a production method, the conjugated diene polymer (A) can include the polymer block (A1) containing isoprene monomer units and the polymer block (A2) containing 1,3-butadiene monomer units that are serially linked to each other.

The monomer (a1) for forming the polymer block (A1) can be any monomer containing isoprene, and the monomer(s) can be selected according to the monomer composition of the target polymer block (A1).

It is sufficient that the polymer block (A1) contains isoprene monomer units. The polymer block (A1) is not particularly limited, and may consist of only isoprene monomer units, or may consist of isoprene monomer units and monomer units other than isoprene monomer units. In this case, examples of monomer units other than isoprene monomer units suitably include aromatic vinyl monomer units. Preferably, the polymer block (A1) also contains aromatic vinyl monomer units in addition to isoprene monomer units.

It is sufficient that the polymer block (A2) contains 1,3-butadiene monomer units. The polymer block (A2) is not particularly limited, and may consist of only 1,3-butadiene monomer units, or may consist of 1,3-butadiene monomer units and monomer units other than 1,3-butadiene monomer units. In this case, examples of monomer units other than 1,3-butadiene monomer units suitably include aromatic vinyl monomer units. Preferably, the polymer block (A2) also contains aromatic vinyl monomer units in addition to 1,3-butadiene monomer units.

Preferably, at least one of the polymer block (A1) and the polymer block (A2) contains units of the vinyl compound containing a functional group interactive with silica. More preferably, at least the polymer block (A2) contains units of the vinyl compound containing a functional group interactive with silica.

The polymer block (A2) that is serially linked to the polymer block (A1) is formed by mixing the polymer block (A1) having an active terminal with the monomer (a2) containing 1,3-butadiene, and continuing the polymerization reaction. The polymer block (A2) formed has an active terminal. On the other hand, the active terminal disappears in the polymer block (A1).

The weight ratio of the polymer block (A1) to the polymer block (A2) (weight of polymer block (A1))/(weight of polymer block (A2)) in the polymer chains having active terminals (weight ratio of the total weight of polymer blocks (A) to that of polymer blocks (B) when a plurality of polymer blocks (A1) and a plurality of polymer blocks (A2) are present) is preferably 0.001 to 0.2, more preferably 0.005 to 0.1, particularly preferably 0.01 to 0.05.

As described above, conjugated diene polymer chains can be prepared in the inert solvent. Usually, the conjugated diene polymer chains thus prepared have active terminals.

Preferably, the conjugated diene polymer chains having active terminals are reacted with a coupling agent to form coupled polymer chains. Examples of the coupling agent include, but not particularly limited to, silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, diethoxydiethylsilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, and the like. Although the coupling agent can be selected according to the molecular weight distribution curve of the target conjugated diene polymer (A), use of a tri- or higher functional coupling agent is preferred, and use of a tetra- or higher functional coupling agent is more preferred.

When the coupling agent is used, preferably, the polymer chains having active terminals obtained by the above polymerization method are partially subjected to a coupling reaction to form coupled polymer chains, thus obtaining a solution containing the polymer chains having active terminals and coupled polymer chains. In this case, the amount of the coupling agent used is not particularly limited, and can be selected according to the molecular weight distribution curve of the target conjugated diene polymer (A). The amount thereof is preferably 0.01 to 0.4 mol, more preferably 0.02 to 0.3 mol in terms of the functional group of the coupling agent relative to 1 mol of the polymerization initiator used at the start of polymerization. As a result of addition of the coupling agent, the active terminals of the polymer chains having active terminals are subjected to a coupling reaction. Thus, the polymer chains reacted in the coupling reaction lose their active terminals, and have no active terminals, while the polymer chains not reacted in the coupling reaction maintain their active terminals.

Preferably, the conjugated diene polymer (A) is converted into a conjugated diene polymer having a modifying group by reacting the active terminals contained in the conjugated diene polymer chains prepared by polymerization or those contained in the conjugated diene polymer chains after the coupling reaction with a modifier. As the modifier, those listed as the modifier for forming a modifying group which can be contained in the conjugated diene polymer (A) used in the present invention can be used.

When the active terminals of the conjugated diene polymer chains are reacted with the modifier, the amount of the modifier used is not particularly limited, and the amount is preferably 0.01 to 10.0 mol, more preferably 0.02 to 5.0 mol, particularly preferably 0.05 to 2.0 mol as the amount of the modifier relative to 1 mol of the active terminals in the polymer chains having active terminals (the amount of the modifier relative to 1 mol of a metal atom in an organic alkali metal compound when the organic alkali metal compound is used as the polymerization initiator). As the modifier, those listed above can be used. These may be used alone or in combination.

Examples of the method of reacting the active terminals of the conjugated diene polymer chains with the modifier include, but not particularly limited to, a method of mixing the polymer chains having active terminals and the modifier in a solvent which can dissolve these; and the like. Examples of the solvent used at this time include the same solvents as those used in polymerization of the conjugated diene polymer (A) described above. At this time, for its simplicity, preferred is a method of adding the modifier to the polymerization solution used in the polymerization in the state where the polymer chains having active terminals prepared above are contained as they are in the polymerization solution. At this time, the modifier may be added to the polymerization system in the form of a solution of an inert solvent used in the polymerization, and the solution concentration is preferably in the range of 1 to 50% by weight. The reaction temperature is not particularly limited, and is usually 0 to 120°C. The reaction time is not particularly limited, and is usually 1 minute to 1 hour.

The modifier can be added to the solution containing the polymer chains having active terminals at any timing. Desirably, the modifier is added to the solution in the state where the polymerization reaction has not completed and the solution containing the polymer chains having active terminals also contains the monomer(s), more specifically, in the state where the solution containing the polymer chains having active terminals contains 100 ppm or more, more preferably 300 to 50,000 ppm of the monomer (s) . Such addition of the modifier can suppress a side reaction between the polymer chains having active terminals and impurities contained in the polymerization system, and enables successful control of the reaction.

A polymerization terminator, such as an alcohol such as methanol and isopropanol or water, is preferably added to the active terminals of the conjugated diene polymer chains prepared through the polymerization or residual active terminals which can be left after reacting with a coupling agent or a modifier, as need, to deactivate unreacted active terminals.

An antioxidant such as a phenol-based stabilizer, a phosphorus-based stabilizer, or a sulfur-based stabilizer may be added, as desired, to the solution of the conjugated diene polymer (A) prepared by the above method. The amount of the antioxidant to be added can be appropriately determined according to the type thereof or and like.

Then, the solution of the conjugated diene polymer (A) prepared by the above method is mixed with the oil (B) as an extender oil, and volatile components are removed from the resulting mixed solution. Thereby, the oil-extended conjugated diene polymer according to the present invention can be produced.

Examples of the method of removing volatile components from the mixed solution include steam stripping, heating of the mixed solution under reduced pressure, and the like.

The conjugated diene polymer (A) used in the present invention may be prepared, as desired, by mixing two or more conjugated diene polymers having different monomer compositions, different molecular structures, different molecular weight distribution curves, and the like. When two or more conjugated diene polymers are mixed, two or more conjugated diene polymers may be mixed in the form of polymer solutions, or may be mixed in the form of solids. Preferably, two or more conjugated diene polymers are mixed in the form of solutions. Specifically, more preferably, solutions of two or more conjugated diene polymers are prepared, and the resulting solutions are mixed.

### <Rubber composition>

The rubber composition according to the present invention comprises the above-mentioned oil-extended conjugated diene polymer according to the present invention and a filler.

The rubber composition according to the present invention may comprise other polymers than the conjugated diene polymer (A). Examples of other polymers include natural rubbers (those may be reformed natural rubbers such as epoxidized natural rubber (ENR), hydrogenated natural rubber (HNR), deproteinized natural rubber (DPNR), high-purity natural rubber (UPNR), and grafted natural rubber), polyisoprene rubbers, emulsion polymerized styrene-butadiene copolymer rubbers, solution polymerized styrene-butadiene copolymer rubbers, and polybutadiene rubbers (those may be high-cis BR or low-cis BR, or may be polybutadiene rubbers containing crystal fibers made of a 1,2-polybutadiene polymer), styrene-isoprene copolymer rubbers, butadiene-isoprene copolymer rubbers, styrene-isoprene-butadiene copolymer rubbers, acrylonitrile-butadiene copolymer rubbers, acrylonitrile-styrene-butadiene copolymer rubbers, butyl rubbers (IIR), ethylene-propylene copolymers, chloroprene rubbers, nitrile chloroprene rubbers, and nitrile isoprene rubber, and exclude the above-mentioned conjugated diene polymer (A). Among these, preferred are natural rubbers, polyisoprene rubbers, polybutadiene rubbers, and solution polymerized styrene-butadiene copolymer rubbers, and more preferred are polybutadiene rubbers. These polymers may be used alone or in combination, such as a combination with a natural rubber and a polybutadiene rubber or that with a natural rubber and a styrene-butadiene copolymer rubber.

In the rubber composition according to the present invention, the oil-extended conjugated diene polymer according to the present invention occupies preferably 10 to 100% by weight, particularly preferably 50 to 100% by weight of the polymer ingredients in the rubber composition. When the oil-extended conjugated diene polymer according to the present invention is present in the polymer ingredients in such a proportion, the rubber composition can form a cross-linked rubber having high processability and having further enhanced low-temperature properties and bloom resistance.

Examples of the filler include silica, calcium silicate, aluminum silicate, carbon black, calcium carbonate, talc, aluminum hydroxide, alumina, clay, mica, and the like. Among these, carbon black and silica are preferred, and silica is more preferred because a cross-linked rubber having further enhanced low-temperature properties and bloom resistance can be obtained. These can be used alone or in combination. For example, carbon black and silica can be used in combination.

Examples of silica include dry white carbon, wet white carbon, colloidal silica, precipitated silica, calcium silicate, aluminum silicate, and the like. Among these, wet white carbon containing hydrous silicic acid as the main component is preferred. A carbon-silica dual phase filler comprising carbon black and silica carried on the surface thereof may be used. These silicas can be used alone or in combination. The nitrogen adsorption specific surface area (measured by the BET method according to ASTM D3037-81) of the silica to be used is preferably 20 to 400 m²/g, more preferably 50 to 220 m²/g, particularly preferably 80 to 170 m²/g. The silica preferably has a pH of 5 to 10.

As the silica, a variety of commercially available silicas can be used, for example. Examples thereof include "Hi-Sil 210", "Hi-Sil 233", and "Hi-Sil 243LD" available from PPG Industries; "Zeosil 1115MP", "Zeosil 1165MP", and "Zeosil 165GR" available from Solvay S.A.; "ULTRASIL VN2", "ULTRASIL VN3", "ULTRASIL 7000GR", and "ULTRASIL 9100GR" available from EVONIK AG; "NIPSIL VN3", "NIPSIL AQ", "NIPSIL ER", and "NIPSIL RS-150" available from TOSOH SILICA CORPORATION; and the like.

Examples of carbon black include furnace black, acetylene black, thermal black, channel black, and graphite. Examples of channel black include EPC, MPC, and CC. Examples of furnace carbon black include SAF, ISAF, HAF, MAF, FEF, SRF, GPF, APF, FF, CF, SCF, and ECF. Examples of thermal black include FT and MT. These carbon blacks may be used alone or in combination.

The amount of the filler to be compounded with the rubber composition according to the present invention is preferably 10 to 250 parts by weight, more preferably 15 to 150 parts by weight, still more preferably 20 to 130 parts by weight relative to 100 parts by weight of the polymer ingredients in the rubber composition. By controlling the amount of the filler to be compounded within these ranges above, the rubber composition can form a cross-linked rubber having high processability and having further enhanced low-temperature properties and bloom resistance.

To obtain a cross-linked rubber having further improved properties, the rubber composition according to the present invention may be further compounded with a silane coupling agent. The silane coupling agent is not particularly limited, and a variety of silane coupling agents can be used. In the present invention, sulfide-based, mercapto-based, protected mercapto-based (such as those having a carbonylthio group), thiocyanate-based, vinyl-based, amino-based, methacrylate-based, glycidoxy-based, nitro-based, epoxy-based, or chloro-based silane coupling agents can be suitably used. Specific examples of silane coupling agents include bis(3-(triethoxysilyl)propyl) disulfide, bis(3-(triethoxysilyl)propyl) trisulfide, bis(3-(triethoxysilyl)propyl) tetrasulfide, γ-mercaptopropyltriethoxysilane, 3-[ethoxybis(3,6,9,12,15-pentaoxaoctacosan-1-yloxy)silyl]-1-propanethiol, 3-octanoylthio-1-propyltriethoxysilane, 3-trimethoxysilylpropyl-N,N-dimethylthiocarbamoyl tetrasulfide, γ-trimethoxysilylpropylbenzothiazyl tetrasulfide, 3-thiocyanate propyltriethoxysilane, vinyltriethoxysilane, N-(β-aminoethyl)-γ-aminopropyltrimethoxysilane, 3-trimethoxysilylpropyl methacrylate monosulfide, γ-glycidoxypropyltriethoxysilane, 3-nitropropyltrimethoxysilane, β-(3,4-epoxycyclohexyl)ethyltrimethoxysilane, 3-chloropropyltrimethoxysilane, and the like. NXT-Z100, NXT-Z30, NXT-Z45, NXT-Z60, and NXT available from Momentive Performance Materials Inc., Si69, Si75, and VP Si363 available from Evonick Degussa AG, and the like can also be used. These silane coupling agents can be used alone or in combination. One or two or more of these may be preliminarily formed into an oligomer, and may be used in an oligomer form. The amount of the silane coupling agent to be compounded is preferably 0.1 to 30 parts by weight, more preferably 1 to 15 parts by weight relative to 100 parts by weight of the filler.

Furthermore, besides the ingredients described above, the rubber composition according to the present invention can be compounded with necessary amounts of compounding agents such as an antioxidant, an activating agent, a process oil, a plasticizer, a lubricant, and a tackifier, according to a normal method.

To obtain the rubber composition according to the present invention, the oil-extended conjugated diene polymer according to the present invention, the filler, and other ingredients optionally used can be kneaded according to a normal method. The kneading temperature is preferably 80 to 200°C, more preferably 120 to 180°C, and the kneading time is preferably 30 seconds to 30 minutes.

### <Cross-linkable rubber composition>

The cross-linkable rubber composition according to the present invention comprises the above-mentioned rubber composition according to the present invention and a cross-linking agent.

Examples of the cross-linking agent include sulfur, sulfur-containing compounds such as halogenated sulfur, organic peroxides, quinone dioximes, organic polyvalent amine compounds, alkyl phenol resins having a methylol group, and the like. Among these, sulfur is preferably used. The amount of the cross-linking agent to be compounded is preferably 0.1 to 15 parts by weight, more preferably 0.5 to 5 parts by weight, particularly preferably 1 to 4 parts by weight relative to 100 parts by weight of the polymer ingredients in the rubber composition.

Furthermore, besides the ingredients described above, the cross-linkable rubber composition according to the present invention can be compounded with necessary amounts of compounding agents such as a cross-linking accelerator, a cross-linking activator, an antioxidant, an activating agent, a process oil, a plasticizer, a lubricant, and a tackifier according to the normal method.

If sulfur or a sulfur-containing compound is used as the cross-linking agent, a cross-linking accelerator and a cross-linking activator are preferably used in combination. Examples of the cross-linking accelerator include sulfenamide-based cross-linking accelerators; guanidine-based cross-linking accelerators; thiourea-based cross-linking accelerators; thiazole-based cross-linking accelerators; thiuram-based cross-linking accelerators; dithiocarbamic acid-based cross-linking accelerators; xanthic acid-based cross-linking accelerators; and the like. Among these, preferred are those containing sulfenamide-based cross-linking accelerators. These cross-linking accelerators are used alone or in combination. The amount of the cross-linking accelerator to be compounded is preferably 0.1 to 15 parts by weight, more preferably 0.5 to 5 parts by weight, particularly preferably 1 to 4 parts by weight relative to 100 parts by weight of the polymer ingredients in the cross-linkable rubber composition.

Examples of the cross-linking activator include higher fatty acids such as stearic acid; zinc oxide; and the like. These cross-linking activators are used alone or in combination. The amount of the cross-linking activator to be compounded is preferably 0.05 to 20 parts by weight, particularly preferably 0.5 to 15 parts by weight relative to 100 parts by weight of the polymer ingredients in the cross-linkable rubber composition.

To obtain the cross-linkable rubber composition according to the present invention, the ingredients can be kneaded according to an ordinary method. For example, the target composition can be obtained by kneading ingredients excluding thermally unstable ingredients, such as a cross-linking agent and a cross-linking accelerator, with the oil-extended conjugated diene polymer and the filler, and then mixing the thermally unstable ingredients, such as a cross-linking agent and a cross-linking accelerator, with the kneaded product. The kneading temperature during kneading of the ingredients excluding thermally unstable ingredients, the oil-extended conjugated diene polymer, and the filler is preferably 80 to 200°C, more preferably 120 to 180°C, and the kneading time is preferably 30 seconds to 30 minutes. The kneaded product and the thermally unstable ingredients are mixed after it is cooled to usually 100°C or less, preferably 80°C or less.

### <Cross-linked rubber>

The cross-linked rubber according to the present invention is prepared by cross-linking the above-mentioned cross-linkable rubber composition according to the present invention.

The cross-linked rubber according to the present invention can be produced using the cross-linkable rubber composition according to the present invention, for example, by shaping the rubber composition with a molding machine having a desired shape, such as an extruder, an injection molding machine, a press, or a roll, and performing a cross-linking reaction by heating to produce a cross-linked rubber having a fixed shape. In this case, the rubber composition may be preliminarily shaped and then cross-linked, or may be shaped and cross-linked at the same time. The shaping temperature is usually 10 to 200°C, preferably 25 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As a heating method, a common method used to cross-link rubber, such as press heating, steam heating, oven heating, or hot air heating, can be appropriately selected.

The cross-linked rubber according to the present invention thus prepared has enhanced low-temperature properties and bloom resistance because it is prepared using the above-mentioned oil-extended conjugated diene polymer according to the present invention. For this reason, owing to its excellent properties, the cross-linked rubber according to the present invention can be used in a variety of applications to parts of tires such as cap treads, base treads, carcasses, sidewalls, and bead parts; materials for industrial products such as hoses, belts, mats, and antivibration rubbers; impact resistance improvers for resins; resin film buffer agents; shoe soles; rubber shoes; golf balls; toys; and the like, for example. Especially, the cross-linked rubber according to the present invention is suitable for a material for a tire due to excellent fuel efficiency and wear resistance.

### EXAMPLES

Hereinafter, the present invention will be described in more detail based on Examples, but the present invention is not limited to these Examples. Hereinafter, "parts" is a weight basis unless otherwise specified weight. Tests and evaluations conformed to the followings.

### [UV/RI detection area ratio [X_{UV}/X_{RI}] of oil (B)]

The oil (B) was analyzed by gel permeation chromatography (GPC) using a differential refractive index detector to obtain an elution profile. In the resulting elution profile, the elution area (unit: mV × sec) derived from the oil (B) was determined as an RI detection area [X_{RI}]. An elution profile was obtained in the same manner as above except that the differential refractive index detector was replaced by an ultraviolet absorption detector. In the resulting elution profile, the elution area (unit: mV × sec) derived from the oil (B) was determined as an UV detection area [X_{UV}]. The UV detection area [X_{UV}] was divided by the RI detection area [X_{RI}] to calculate the UV/RI detection area ratio [X_{UV}/X_{RI}]. Specific measurement conditions for gel permeation chromatography were set as follows.
measurement apparatus: high performance liquid chromatograph (available from Tosoh Corporation, trade name "HLC-8320")
columns: two polystyrene-based columns available from Tosoh Corporation, trade name "GMH-HR-H", connected in series.
detector: differential refractive index (RI), ultraviolet absorption light (UV)
eluent: tetrahydrofuran
column temperature: 40°C

### [Extrapolated initial melting temperature [Tᵢₘ₋ₘₐₓ] of melting peak in highest temperature region in oil (B)]

The oil (B) was measured by differential scanning calorimetry (DSC). The obtained chart was observed to identify the melting peak in the chart. When a plurality of melting peaks were observed in the chart, first, the chart area corresponding to the total heat of fusion was determined by determining chart areas corresponding to the heat of fusion of the melting peaks (areas defined by the peak profiles of the melting peaks and the base line), and then, calculating the sum of the chart areas corresponding the heat of fusion of the melting peaks. When the chart area corresponding to the heat of fusion of any melting peak was 10 area% or more of the chart area corresponding to the total heat of fusion, the melting peak was identified as a melting peak showing a heat of fusion of 10% or more of the total heat of fusion. Among the melting peaks showing a heat of fusion of 10% or more of the total heat of fusion, the extrapolated initial melting temperature [Tᵢₘ₋ₘₐₓ] of the melting peak having the highest peak temperature was determined. Here, in this specification, the extrapolated initial melting temperature indicates a temperature corresponding to the point of intersection between the tangent of a portion of a melting peak having the maximum inclination and the base line in a low temperature region in the peak profile. When only one melting peak is observed in the chart, the extrapolated initial melting temperature of the melting peak was determined. Specific measurement conditions for differential scanning calorimetry were set as follows.
measurement apparatus: differential scanning calorimeter (available from PerkinElmer, Inc., trade name "DSC8500")
heating rate: 20°C/min
gas for purging: helium

### [Weight average molecular weight and coupling ratio of conjugated diene polymer]

A chart was obtained based on the molecular weight against polystyrene standards in gel permeation chromatography (GPC), and the weight average molecular weight of the conjugated diene polymer was determined based on the chart obtained. Specific measurement conditions for gel permeation chromatography were set as follows.
measurement apparatus: high performance liquid chromatograph (available from Tosoh Corporation, trade name "HLC-8320")
columns: two polystyrene-based columns available from Tosoh Corporation, trade name "GMH-HR-H", connected in series.
detector: differential refractive index (RI)
eluent: tetrahydrofuran
column temperature: 40°C

The coupling ratio was determined as follows: In the elution profile obtained by gel permeation chromatography on the conditions above, a peak having the smallest peak top molecular weight (the peak top molecular weight corresponding to the polymer chain before the coupling reaction) was identified; thereafter, the elution area of a portion having a peak top molecular weight 1.5 times or larger the peak top molecular weight of the peak (peak top molecular weight corresponding to the coupled polymer) was determined, was divided by the total elution area, and was converted to percentage.

### [Aromatic vinyl monomer units content and vinyl bond content in conjugated diene polymer]

The aromatic vinyl monomer units content and vinyl bond content of the conjugated diene polymer were measured by ¹H-NMR.

### [Mooney viscosity (ML1+4,100°C) of oil-extended conjugated diene polymer]

The Mooney viscosity was measured using a Mooney viscometer (available from SHIMADZU Corporation) according to JIS K6300.

### [tanδ peak temperature index (low-temperature properties) of cross-linked rubber]

A test piece having a length of 50 mm, a width of 12.7 mm, and a thickness of 2 mm was prepared from a cross-linked rubber in the form of a sheet having a thickness of 2 mm. Using ARES-G2 (available from TA Instruments, Inc.), the prepared test piece was measured for tanδ from - 100°C to 20°C at a dynamic strain of 0.5% and a frequency of 10 Hz. In the chart obtained on the conditions above, the temperature (unit: °C) corresponding to the highest value of tanδ was determined. For the results in Examples 1 to 3 and Comparative Examples 2 to 3, the tanδ peak temperature (unit: °C) in Comparative Example 1 was regarded as 100, the tanδ peak temperatures of Examples and Comparative Examples were determined as indices, each of which was defined as the tanδ peak temperature index. For the results in Examples 4 to 5 and Comparative Example 5, the tanδ peak temperature (unit: °C) in Comparative Example 4 was regarded as 100, the tanδ peak temperatures of Examples and Comparative Example were determined as indices, each of which was defined as the tanδ peak temperature index. The tanδ peak temperatures in Comparative Examples 1 and 4 were less than 0°C, and a greater tanδ peak temperature index indicates a lower tanδ peak temperature. It can be determined that a greater tanδ peak temperature index indicates more excellent low-temperature properties.

### [Bloom resistance of cross-linked rubber]

The cross-linked rubbers in the form of a sheet obtained in Examples and Comparative Examples were stored for 4 weeks in an atmosphere at a temperature of 23°C and a humidity of 50%, and the surfaces of the cross-linked rubbers were visually observed about bloom. The cross-linked rubber without bloom was determined as O, and that having bloom was determined as X. It can be determined that the cross-linked rubber having less bloom has more excellent bloom resistance.

### (Polymerization Example 1 [polymerization solution a1 of conjugated diene polymer Al])

The inside of a polymerization reactor made of stainless steel and equipped with a stirrer having an inner volume of 30 L was purged with dry nitrogen. Next, 13.77 kg of industrial hexane (available from Sumitomo Chemical Co., Ltd., trade name: Hexane (general product), density: 0.68 g/mL), 1.76 kg of cyclohexane, 555 g of 1,3-butadiene, 900 g of styrene, and 6.33 mmol of N,N,N',N'-tetramethylethylenediamine were placed into the polymerization reactor. Next, an n-hexane solution containing n-butyllithium (n-BuLi) in an amount needed for neutralization of impurities which were contained in the system and inhibited polymerization was added to the polymerization reactor. Furthermore, an n-hexane solution containing 9.31 mmol of n-butyllithium (n-BuLi) was placed into the polymerization reactor, and the mixed solution was stirred at a stirring rate of 160 rpm and a polymerization reactor inner temperature of 40°C. After 30 minutes had passed from the start of polymerization, the mixed solution was stirred while 864 g of 1,3-butadiene and 129 g of styrene were continuously fed to the mixed solution over 85 minutes and 70 minutes, respectively. After 135 minutes had passed from the start of polymerization, the mixed solution was stirred while 38 g of 1,3-butadiene was continuously fed to the mixed solution over 3 minutes, and was further stirred for 12 minutes to prepare a polymerization solution. The highest temperature during the polymerization reaction was 70°C. Next, 0.22 mmol of 1,6-bis(trichlorosilyl)hexane was added to the resulting polymerization solution, followed by stirring for 15 minutes. Thereafter, polyorganosiloxane represented by General Formula (10) below was added such that the content of the epoxy group was 0.34 mmol, causing a reaction for 20 minutes. Subsequently, methanol as a polymerization terminator was added in an amount corresponding to moles two times moles of n-butyllithium used, and the polymerization solution was further stirred for 5 minutes. In the next step, 0.20 parts of 2,4-bis(octylthiomethyl)-6-methylphenol (available from RIANOX, trade name: RIANOX1520) as an antioxidant was added to the solution relative to 100 parts of the conjugated diene rubber, and the solution was stirred to prepare a polymerization solution a1 containing a conjugated diene polymer A1.

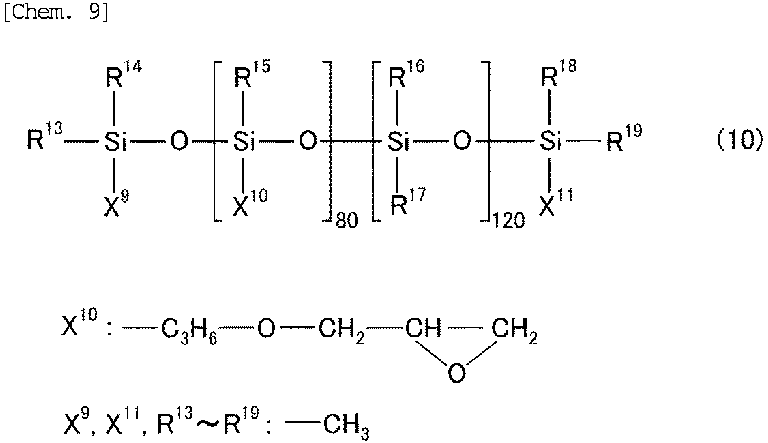

10 g of the resulting polymerization solution a1 was extracted, and was dried at 55°C under reduced pressure for 12 hours, obtaining the conjugated diene polymer A1. From measurement of the resulting conjugated diene polymer A1 by the methods above, the weight average molecular weight (Mw) was 717,000, the coupling ratio was 32.9%, the styrene unit content was 41.2% by weight, and the vinyl bond content in butadiene units was 32.5 mol%.

### (Polymerization Example 2 [polymerization solution a2 of conjugated diene polymer A2])

The inside of a polymerization reactor made of stainless steel and equipped with a stirrer having an inner volume of 20 L was purged with dry nitrogen. Next, 8.84 kg of industrial hexane (available from Sumitomo Chemical Co., Ltd., trade name: Hexane (general product), density: 0.68 g/mL), 6.95 mL of tetrahydrofuran, 0.57 mL of ethylene glycol dibutyl ether, 693 g of 1,3-butadiene, and 228 g of styrene were placed into the polymerization reactor. Next, an n-hexane solution containing n-butyllithium (n-BuLi) in an amount needed for neutralization of impurities which were contained in the system and inhibited polymerization was added to the polymerization reactor. Furthermore, an n-hexane solution containing 6.99 mmol of n-butyllithium (n-BuLi) was placed into the polymerization reactor, and the mixed solution was stirred at a stirring rate of 160 rpm and a polymerization reactor inner temperature of 45°C. After 7 minutes had passed from the start of polymerization, the mixed solution was stirred while 936 g of 1,3-butadiene and 59 g of styrene were continuously fed to the mixed solution over 70 minutes. After 15 minutes had passed from the start of polymerization, 3.72 mmol of bis(diethylamino)methylvinylsilane was placed into the mixed solution in the polymerization reactor. After 90 minutes had passed from the start of polymerization, 0.524 mmol of tetrachlorosilane was added, followed by stirring for 15 minutes. Thereafter, 8.11 mmol of [3-(diethylamino)propyl]trimethoxysilane as a modifier was added to the polymerization solution, which was stirred for 15 minutes. Next, an n-hexane solution containing 12.17 mmol of n-BuLi was added to the polymerization solution, which was stirred for 15 minutes. In the next step, 20 mL of a hexane solution containing 1.2 mL of methanol was placed into the polymerization reactor, and the polymerization solution was stirred for 5 minutes. The highest temperature during the polymerization reaction was 70°C. In the next step, 0.20 parts of 2,4-bis(octylthiomethyl)-6-methylphenol (available from RIANOX, trade name: RIANOX1520) as an antioxidant was added to the solution relative to 100 parts of the conjugated diene rubber, followed by stirring to prepare a polymerization solution a2 containing a conjugated diene polymer A2.

10 g of the resulting polymerization solution a2 was extracted, and was dried at 55°C under reduced pressure for 12 hours, obtaining the conjugated diene polymer A2. From measurement of the resulting conjugated diene polymer A2 by the methods above, the weight average molecular weight (Mw) was 981,000, the coupling ratio was 49.2%, the styrene unit content was 14.5% by weight, and the vinyl bond content in butadiene units was 24.7 mol%.

In Examples and Comparative Examples below, the following oils B1 to B6 were used.
oil B1: vegetable oil "DelicaAce HOL" (available from The Nisshin OilliO Group, Ltd., trade name: DelicaAce HOL, iodine number: 66)
oil B2: vegetable oil "Soybean oil" (available from The Nisshin OilliO Group, Ltd., trade name: Soybean oil, iodine number: 130)
oil B3: vegetable oil "Linseed oil "(available from The Nisshin OilliO Group, Ltd., trade name: Linseed oil, iodine number: 190)
oil B4: petroleum-based aromatic oil "T-DAE" (available from ENEOS Corporation, trade name: AROMAX T-DAE, no melting peak)
oil B5: plant-derived oil "Vivamax 5000" (available form H&R, trade name: Vivamax 5000, no melting peak)
oil B6: vegetable oil "Refined palm oil" (available from The Nisshin OilliO Group, Ltd., trade name: Refined palm oil, iodine number: 53)

The oils B1 to B6 were measured by the methods above to determine the UV/RI detection area ratio [X_{UV}/X_{RI}] and the extrapolated initial melting temperature [Tᵢₘ₋ₘₐₓ] of a melting peak in the highest temperature region. The results are shown in Table 1.

### (Example 1 [oil-extended conjugated diene polymer P1])

75 g of the oil B1 was added to the polymerization solution a1 containing 200 g of the conjugated diene polymer A1 prepared in Polymerization Example 1, and the solution was stirred. Then, most of the volatile components in the resulting polymerization solution was evaporated at normal temperature for 24 hours, followed by further drying under reduced pressure at 55°C for 12 hours to afford an oil-extended conjugated diene polymer P1. The resulting oil-extended conjugated diene polymer P1 was measured for Mooney viscosity. The results are shown in Table 1.

In a Brabender type mixer having a volume of 250 ml, 110 parts by weight (80 parts by weight as the rubber ingredients) of the oil-extended conjugated diene polymer P1 and 20 parts by weight of polybutadiene rubber (available from ZEON Corporation, trade name: Nipol BR1220) were masticated for 30 seconds. In the next step, 80 parts by weight of silica (available from Evonik, trade name: ULTRASIL 7000GR), 6.4 parts by weight of a silane coupling agent (available from Evonik, trade name: Si75), 5.0 parts by weight of carbon black (available from Cabot Japan K.K., trade name: N339), 3.0 parts by weight of zinc oxide (available from Seido Chemical Industry Co., Ltd., trade name: two Zinc Oxides), 2.0 parts by weight of stearic acid (available from New Japan Chemical Co., Ltd., trade name: Stearic acid 50S), and 2.0 parts by weight of N-phenyl-N'-(1,3-dimethylbutyl)-p-phenylenediamine (available from Ouchi Shinko Chemical Industrial Co., Ltd., trade name: NOCRAC 6C) were added, and these materials were further kneaded for 4.5 minutes. Then, a rubber composition after primary kneading was discharged from a Labo Plastomill. When the rubber composition was discharged, the Labo Plastomill indicated a temperature of 160°C. The rubber composition after primary kneading was cooled to room temperature, and was again kneaded in the Brabender type mixer at a starting temperature of 110°C for 3 minutes. Thereafter, the rubber composition after secondary kneading was discharged from the Labo Plastomill. In the next step, 1.5 parts by weight of sulfur (available from Tsurumi Chemical Industry Co., Ltd., trade name: "GOLDEN FLOWER" SULFUR POWDER 200 mesh), the rubber composition after secondary kneading, 1.5 parts by weight of N-cyclohexyl-2-benzothiazolylsulfenamide (available from Ouchi Shinko Chemical Industrial Co., Ltd., trade name: NOCCELER CZ-G), and 2.0 parts by weight of 1,3-diphenylguanidine (available from Ouchi Shinko Chemical Industrial Co., Ltd., trade name: NOCCELER D) were added to an open roll mill at 50°C, and were kneaded with an open roll mill set at 50°C, affording a cross-linkable rubber composition in the form of a sheet.

The resulting cross-linkable rubber composition in the form of a sheet was press cross-linked at 160°C for 35 minutes, affording a cross-linked rubber in the form of a sheet having a thickness of 2 mm. Using he resulting cross-linked rubber in the form of a sheet, a test piece was prepared, and was evaluated for low-temperature properties and bloom resistance by the methods above. The results are shown in Table 2.

### (Examples 2 and 3, Comparative Examples 1 to 3 [oil-extended conjugated diene polymers P2 to P6])

Oil-extended conjugated diene polymers (P2 to P6) were prepared in the same manner as in Example 1 except that oil B1 was replaced by 75 g of the oil (B2 to B6) shown in Table 1. The resulting oil-extended conjugated diene polymers were evaluated for Mooney viscosity. The results are shown in Table 1. The resulting cross-linked rubbers in the form of a sheet were prepared in the same manner as in Example 1 except that the resulting oil-extended conjugated diene polymers were used, and were measured and evaluated in the same manner as in Example 1. The results are shown in Table 2.

### [Table 1]

**Table 1**

| | | | Example 1 | Example 2 | Example 3 | Comp. Ex. 1 | Comp. Ex. 2 | Comp. Ex. 3 |
|---|---|---|---|---|---|---|---|---|
| Conjugated diene polymer (A) | | | | | | | | |
| | Type | | A1 | | | | | |
| | Weight average molecular weight | | 717,000 | | | | | |
| | Coupling ratio | [%] | 32.9 | | | | | |
| | Styrene unit content | [wt%] | 41.2 | | | | | |
| | Vinyl bond content | [mol%] | 32.5 | | | | | |

| Oil (B) | | | | | | | | |
|---|---|---|---|---|---|---|---|---|
| | Type | | B1 | B2 | B3 | B4 | B5 | B6 |
| | UV/RI detection area ratio [X_{UV}/X_{RI}] | | 0.17 | 0.39 | 1.14 | 20.5 | 24.4 | 0.10 |
| | Extrapolated initial melting temperature [Tᵢₘ₋ₘₐₓ] of melting peak in highest temperature region | [°C] | -7.6 | -30.9 | -15.4 | - | - | 43.6 |
| | Iodine number | gl₂/100g | 66 | 130 | 190 | - | - | 53 |

| Oil-extended conjugated diene polymer | | | | | | | | |
|---|---|---|---|---|---|---|---|---|
| | Type | | P1 | P2 | P3 | P4 | P5 | P6 |
| | Content of conjugated diene polymer (A) | [parts by weight] | 100 | 100 | 100 | 100 | 100 | 100 |
| | Content of oil (B) | [parts by weight] | 37.5 | 37.5 | 37.5 | 37.5 | 37.5 | 37.5 |
| | Mooney viscosity (ML1+4, 100°C) | | 35 | 33 | 33 | 52 | 55 | 33 |

### [Table 2]

**Table 2**

| | | | Example 1 | Example 2 | Example 3 | Comp. Ex. 1 | Comp. Ex. 2 | Comp. Ex. 3 |
|---|---|---|---|---|---|---|---|---|
| Polymer ingredients in rubber composition | | | | | | | | |
| | Oil-extended conjugated diene polymer (P1) | [parts by weight] | 110 | | | | | |
| | Oil-extended conjugated diene polymer (P2) | [parts by weight] | | 110 | | | | |
| | Oil-extended conjugated diene polymer (P3) | [parts by weight] | | | 110 | | | |
| | Oil-extended conjugated diene polymer (P4) | [parts by weight] | | | | 110 | | |
| | Oil-extended conjugated diene polymer (P5) | [parts by weight] | | | | | 110 | |
| | Oil-extended conjugated diene polymer (P6) | [parts by weight] | | | | | | 110 |
| | Polybutadiene rubber | [parts by weight] | 20 | 20 | 20 | 20 | 20 | 20 |

| Evaluations | | | | | | | | |
|---|---|---|---|---|---|---|---|---|
| | tanδ peak temperature index (low-temperature properties) | | 127 | 159 | 168 | 100 | 83 | 115 |
| | Bloom resistance | | O | O | O | O | O | X |

Table 2 shows that the oil-extended conjugated diene polymers each comprising the conjugated diene polymer (A) extended using 5 to 60 parts by weight of the oil (B) relative to 100 parts by weight of the conjugated diene polymer (A), wherein (1) the UV/RI detection area ratio [X_{UV}/X_{RI}] was 10 or less, and (2) the extrapolated initial melting temperature [Tᵢₘ₋ₘₐₓ] of the melting peak in the highest temperature region was 23°C or less, formed cross-linked rubbers having excellent low-temperature properties and bloom resistance (Examples 1 to 3).

In contrast, the oil-extended conjugated diene polymers each comprising the conjugated diene polymer (A) extended using the oil, wherein the UV/RI detection area ratio [X_{UV}/X_{RI}] was not 10 or less, formed cross-linked rubbers having inferior low-temperature properties (Comparative Examples 1 and 2).

The oil-extended conjugated diene polymer comprising the conjugated diene polymer (A) extended using the oil, wherein the extrapolated initial melting temperature [Tᵢₘ₋ₘₐₓ] of the melting peak in the highest temperature region was not 23°C or less, formed a cross-linked rubber having inferior bloom resistance (Comparative Example 3).

### (Example 4 [oil-extended conjugated diene polymer P7])

50 g of the oil B2 was added to the polymerization solution a2 containing 200 g of the conjugated diene polymer A2 prepared in Polymerization Example 2, and the solution was stirred. Then, most of volatile components in the resulting polymerization solution was evaporated at normal temperature for 24 hours, followed by further drying under reduced pressure at 55°C for 12 hours to afford an oil-extended conjugated diene polymer P7. The resulting oil-extended conjugated diene polymer P7 was measured for Mooney viscosity. The results are shown in Table 3. A cross-linked rubber in the form of a sheet was prepared in the same manner as in Example 1 except that 100 parts by weight (80 parts by weight as the rubber ingredients) of the resulting oil-extended conjugated diene polymer P7 was used, and was measured and evaluated in the same manner as in Example 1. The results are shown in Table 4.

### (Example 5, Comparative Examples 4 and 5 [oil-extended conjugated diene polymers P8 to P10])

Oil-extended conjugated diene polymers (P8 to P10) were prepared in the same manner as in Example 2 except that the oil B2 was replaced by 50 g of the oil (B3, B4, B6) shown in Table 3. The resulting oil-extended conjugated diene polymers were measured for Mooney viscosity. The results are shown in Table 3. Cross-linked rubbers in the form of a sheet were each prepared in the same manner as in Example 1 except that 100 parts by weight (80 parts by weight as the rubber ingredients) of the oil-extended conjugated diene polymer was used, and were measured and evaluated in the same manner as in Example 1. The results are shown in Table 4.

### [Table 3]

**Table 3**

| | | | Example 4 | Example 5 | Comp. Ex. 4 | Comp. Ex. 5 |
|---|---|---|---|---|---|---|
| Conjugated diene polymer (A) | | | | | | |
| | Type | | A2 | | | |
| | Weight average molecular weight | | 981,000 | | | |
| | Coupling ratio | [%] | 49.2 | | | |
| | Styrene unit content | [wt%] | 14.5 | | | |
| | Vinyl bond content | [mol%] | 24.7 | | | |

| Oil (B) | | | | | | |
|---|---|---|---|---|---|---|
| | Type | | B2 | B3 | B4 | B5 |
| | UV/RI detection area ratio [X_{UV}/X_{RI}] | | 0.39 | 1.14 | 20.5 | 0.10 |
| | Extrapolated initial melting temperature [Tᵢₘ₋ₘₐₓ] of melting peak in highest temperature region | [°C] | -30.9 | -15.4 | - | 43.6 |
| | Iodine number | gl₂/100g | 130 | 190 | - | 53 |

| Oil-extended conjugated diene polymer | | | | | | |
|---|---|---|---|---|---|---|
| | Type | | P7 | P8 | P9 | P10 |
| | Content of conjugated diene polymer (A) | [parts by weight] | 100 | 100 | 100 | 100 |
| | Content of oil (B) | [parts by weight] | 25.0 | 25.0 | 25.0 | 25.0 |
| | Mooney viscosity (ML1+4, 100°C) | | 77 | 78 | 85 | 78 |

### [Table 4]

**Table 4**

| | | | Example 4 | Example 5 | Comp. Ex. 4 | Comp. Ex. 5 |
|---|---|---|---|---|---|---|
| Polymer ingredients in rubber composition | | | | | | |
| | Oil-extended conjugated diene polymer (P7) | [parts by weight] | 100 | | | |
| | Oil-extended conjugated diene polymer (P8) | [parts by weight] | | 100 | | |
| | Oil-extended conjugated diene polymer (P9) | [parts by weight] | | | 100 | |
| | Oil-extended conjugated diene polymer (P10) | [parts by weight] | | | | 100 |
| | Polybutadiene rubber | [parts by weight] | 20 | 20 | 20 | 20 |

| Evaluations | | | | | | |
|---|---|---|---|---|---|---|
| | tanδ peak temperature index (low-temperature properties) | | 114 | 116 | 100 | 108 |
| | Bloom resistance | | O | O | O | X |

Table 4 shows that the oil-extended conjugated diene polymers each comprising the conjugated diene polymer (A) extended using 5 to 60 parts by weight of the oil (B) relative to 100 parts by weight of the conjugated diene polymer (A), wherein (1) the UV/RI detection area ratio [X_{UV}/X_{RI}] was 10 or less, and (2) the extrapolated initial melting temperature [Tᵢₘ₋ₘₐₓ] of the melting peak in the highest temperature region was 23°C or less, formed cross-linked rubbers having excellent low-temperature properties and bloom resistance (Examples 4 and 5).

In contrast, the oil-extended conjugated diene polymer comprising the conjugated diene polymer (A) extended using the oil, wherein the UV/RI detection area ratio [X_{UV}/X_{RI}] was not 10 or less, formed a cross-linked rubber having inferior low-temperature properties(Comparative Example 4).

The oil-extended conjugated diene polymer comprising the conjugated diene polymer (A) extended using the oil, wherein the extrapolated initial melting temperature [Tᵢₘ₋ₘₐₓ] of the melting peak in the highest temperature region was not 23°C or less, formed a cross-linked rubber having inferior bloom resistance (Comparative Example 5).

## Claims

1. An oil-extended conjugated diene polymer comprising a conjugated diene polymer (A) extended with an oil (B),
wherein the content of the oil (B) is 5 to 60 parts by weight relative to 100 parts by weight of the conjugated diene polymer (A), and
in the oil (B),
(1) a ratio [X_{UV}/X_{RI}] of a UV detection area [X_{UV}] to an RI detection area [X_{RI}] is 10 or less, where in gel permeation chromatography analysis using a differential refractive index detector and an ultraviolet absorption detector, the elution area derived from the oil (B) in an elution profile obtained using the differential refractive index detector is defined as an RI detection area [X_{RI}], and the elution area derived from the oil (B) in an elution profile obtained using the ultraviolet absorption detector is defined as a UV detection area [X_{UV}], and
(2) the oil (B) shows one or more melting peaks measured by differential scanning calorimetry, and among melting peaks showing a heat of fusion of 10% or more of the total heat of fusion measured by differential scanning calorimetry, an extrapolated initial melting temperature [Tᵢₘ₋ₘₐₓ] of a melting peak having the highest peak temperature is 23°C or less.

2. The oil-extended conjugated diene polymer according to claim 1, wherein the oil (B) has an iodine number of 150 or more.

3. The oil-extended conjugated diene polymer according to claim 1 or 2, wherein the oil-extended conjugated diene polymer has a Mooney viscosity (ML1+4,100°C) of 10 to 200.

4. A rubber composition comprising the oil-extended conjugated diene polymer according to any one of claims 1 to 3 and a filler.

5. The rubber composition according to claim 4, comprising silica as the filler.

6. The rubber composition according to claim 4 or 5, further comprising a silane coupling agent.

7. A cross-linkable rubber composition comprising the rubber composition according to any one of claims 4 to 6 and a cross-linking agent.

8. A cross-linked rubber which is a cross-linked product of the cross-linkable rubber composition according to claim 7.

9. A tire comprising the cross-linked rubber according to claim 8.
